# EUROPÄISCHE PATENTSCHRIFT

(11) **EP 2 360 506 B1**
(45) Veröffentlichungstag und Bekanntmachung des Hinweises auf die Patenterteilung: **10.05.2017**
(21) Anmeldenummer: 10153617.5
(22) Anmeldetag: 15.02.2010
(51) Int. Cl.: G02B 21/36, G02B 21/00, G05B 19/00

(54) **Vorrichtung, die in ein optisches System einbettbar ist, und Verfahren**
Device which can be embedded in an optical system and method
Dispositif pouvant être intégré dans un système optique et procédé

(43) Veröffentlichungstag der Anmeldung: 24.08.2011
(73) Patentinhaber: Carl Zeiss Microscopy GmbH, 07745 Jena (DE)
(72) Erfinder: Kühm, Andreas, 07774 Dornburg-Camburg (DE); Möhler, Gunter, 04720 Mochau (DE)
(74) Vertreter: Sticht, Andreas

(56) Entgegenhaltungen:
- US-A- 6 118 581
- US-A1- 2003 227 673
- US-A1- 2003 231 791
- US-A1- 2007 211 243
- US-A1- 2008 055 406
- US-A1- 2008 155 452

## Beschreibung

Die Erfindung betrifft eine Vorrichtung, die in ein optisches System einbettbar ist, und ein Verfahren zum Steuern wenigstens eines steuerbaren Moduls eines optischen Systems. Die Erfindung betrifft insbesondere eine derartige Vorrichtung und ein derartiges Verfahren, bei der bzw. bei dem eine in das optische System eingebettete bzw. einbettbare Recheneinrichtung ein steuerbares Modul oder mehrere steuerbare Module steuert.

Zahlreiche optische Systeme beinhalten mittlerweile ein Modul oder mehrere Module, die in das optische System eingebettet sind und mit deren Hilfe verschiedene Vorgänge automatisiert werden können. Beispiele für derartige Module sind Elektronikeinheiten. Beispielsweise weisen moderne Laser-Mikroskopsysteme einen Aktuator oder mehrere Aktuatoren zum Verstellen einer Tischposition, einen Shutter, eine Objektbeleuchtung, die eingeschaltet, ausgeschaltet oder gedimmt werden kann, eine Lasersteuerung oder einen Temperatursensor auf. Jede dieser Einheiten bildet ein steuerbares Modul, wobei durch eine koordinierte Ansteuerung der Module auch komplexe Abläufe teilweise oder vollständig automatisiert implementiert werden können. Ähnlich kann ein Slide-Scanner zur Untersuchung von z.B. histologischen Schnitten eine Einrichtung zur Magazinpositionierung und eine Slide-Greifer-Einrichtung aufweisen, mit denen selektiv eine von mehreren Slides und somit ein gewünschter histologischer Schnitt geladen werden kann, um ihn zu scannen. Sowohl die Einrichtung zur Magazinpositionierung als auch die Slide-Greifer-Einrichtung stellt ein steuerbares Modul dar, wobei durch eine koordinierte Ansteuerung der Module auch komplexe Abläufe teilweise oder vollständig automatisiert implementiert werden können.

Um die in das optische System integrierten steuerbaren Module zu steuern, kann in das optische System eine Recheneinrichtung, beispielsweise ein Mikro-Controller, eingebettet werden. Die Recheneinrichtung kann mehrere Module ansteuern und so als zentrale Steuereinrichtung wirken. Insbesondere können mithilfe einer derartigen Recheneinrichtung auch komplexe Arbeitsabläufe in dem optischen System automatisiert werden, wobei die Recheneinrichtung die Module derart steuert, dass durch die von den Modulen ausgeführten Arbeitsvorgänge der Arbeitsablauf realisiert wird. Ein beispielhafter Arbeitsablauf in einem Slide-Scanner ist die koordinierte Bewegung der Einrichtung zur Magazinpositionierung und der Slide-Greifer-Einrichtung zum Laden einer Slide. Arbeitsabläufe können von einem oder mehreren Parametern abhängen. Beispielsweise ist bei einem Slide-Scanner der von der Einrichtung zur Magazinpositionierung durchgeführte Bewegungsablauf und der von der Slide-Greifer-Einrichtung durchgeführte Bewegungsablauf davon abhängig, welche Position die zu ladende Slide aufweist.

Eine Möglichkeit, die Steuerung der Module durch die Recheneinrichtung zur Durchführung eines Arbeitsablaufes zu realisieren, besteht darin, dass ein kompilierter Befehlscode als Firmware oder Software in der Recheneinrichtung implementiert ist. Der Befehlscode entspricht einem oder mehreren Arbeitsabläufen, die typischerweise mehrere elementare Arbeitsvorgänge umfassen. Während dadurch eine schnelle Steuerung der Module gewährleistet werden kann, sind Änderungen der Arbeitsabläufe nur mit größerem Aufwand realisierbar. Auch wenn die Arbeitsabläufe derart implementiert sein können, dass bei einem Aufruf eines Arbeitsablaufes ein gewünschter Parameter oder mehrere gewünschte Parameter mit übergeben werden kann bzw. können, kann es auch wünschenswert sein, die verschiedenen Arbeitsvorgänge, aus denen ein Arbeitsablauf besteht, oder deren Abfolge oder Verknüpfung zu verändern. Typischerweise erfordert eine derartige Änderung eines Arbeitsablaufes eine Änderung des Quellcodes, eine Validierung des geänderten Quellcodes und das Aufspielen des Kompilats auf das optische System. Bei bereits in der Recheneinrichtung des optischen Systems implementierten Arbeitsabläufen kann es schwierig oder sogar unmöglich sein, aus dem hinterlegten Befehlscode die Funktionsweise des Arbeitsablaufes zu ermitteln. Dies erschwert die Änderung von bereits implementierten Arbeitsabläufen, da die Informationen über die von den verschiedenen Modulen durchführbaren Arbeitsvorgänge und deren Eigenschaften aus dem in dem Mikro-Controller implementierten Befehlscode nicht oder nur mit größerem Aufwand ersichtlich sind. Darüber hinaus ist es auch nicht ohne Weiteres möglich, die in dem Mikro-Controller eines optischen Systems implementierten Firmware für andere optische Systeme mit anderen Modulen oder mit anderen Arbeitsvorgängen der Module anzupassen.

Wenn die Steuerung von Modulen eines optischen Systems nicht über einen integrierten Mikro-Controller, sondern von einem über eine Schnittstelle mit den Modulen gekoppelten externen Computer durchgeführt wird, können abhängig davon, wie die Steuersoftware implementiert ist, die oben genannten Schwierigkeiten weiterbestehen. Darüber hinaus kann die Steuerung mit einem externen Computer zu unerwünschten zeitlichen Verzögerungen führen.

Die US 2008/155452 A1, die als Basis für den Oberbegriff der unabhängigen Ansprüche dient, beschreibt eine Steuereinheit für ein Mikroskopsystem. Die Steuereinheit fragt Informationen über Untereinheiten des Mikroskopsystems ab. Die Steuereinheit empfängt Steuerinformationen und steuert den Betrieb der Untereinheiten des Mikroskopsystems. Dabei wird beispielsweise jeweils eine Steuerinformation empfangen, die nur eine der Untereinheiten betrifft, und von der Steuereinheit umgesetzt.

Der Erfindung liegt die Aufgabe zugrunde, eine verbesserte, in ein optisches System einbettbare Vorrichtung und ein verbessertes Verfahren zum Steuern wenigstens eines steuerbaren Moduls anzugeben. Der Erfindung liegt insbesondere die Aufgabe zugrunde, eine derartige Vorrichtung und ein derartiges Verfahren anzugeben, bei der bzw. bei dem neue Arbeitsabläufe einfacher implementiert und/oder bereits bestehende Arbeitsabläufe leichter modifiziert werden können.

Erfindungsgemäß wird die Aufgabe gelöst durch eine Vorrichtung und ein Verfahren, wie sie in den unabhängigen Ansprüchen angegeben sind. Die abhängigen Ansprüche definieren vorteilhafte oder bevorzugte Ausführungsbeispiele.

Nach einem Aspekt der Erfindung wird eine Vorrichtung angegeben, die in ein optisches System, insbesondere ein Mikroskopsystem, einbettbar ist. Die Vorrichtung umfasst wenigstens ein steuerbares Modul und eine Recheneinrichtung, die wenigstens eine erste Schnittstelle zum Steuern des wenigstens einen steuerbaren Moduls aufweist. Die Recheneinrichtung weist eine zum Datenaustausch mit einer weiteren Recheneinrichtung ausgestaltete zweite Schnittstelle auf und ist eingerichtet, um über die zweite Schnittstelle Informationen über Arbeitsvorgänge, die von dem wenigstens einen steuerbaren Modul ausführbar sind, auszugeben. Die Recheneinrichtung ist weiterhin eingerichtet, um über die zweite Schnittstelle Daten zu empfangen, die einen eine Mehrzahl von Arbeitsvorgängen umfassenden Arbeitsablauf repräsentieren. Die Recheneinrichtung ist weiterhin eingerichtet, um abhängig von den empfangenen Daten für die Mehrzahl von Arbeitsvorgängen des Arbeitsablaufes jeweils eine Steuerinformation, die dem entsprechenden Arbeitsvorgang zugeordnet ist, umzusetzen, um abhängig von der Steuerinformation das wenigstens eine steuerbare Modul zu steuern.

Bei einer derart ausgebildeten Vorrichtung kann die Recheneinrichtung Informationen über verfügbare Arbeitsvorgänge ausgeben. Dadurch können die für die Entwicklung neuer Arbeitsabläufe oder für die Abänderung in der Vorrichtung implementierter Arbeitsabläufe erforderlichen Informationen von der Vorrichtung selbst bereitgestellt werden. Bei der Ausführung eines Arbeitsablaufes verwendet die Recheneinrichtung die Steuerinformationen, die jeweils einem Arbeitsvorgang zugeordnet sind.

Durch die Verwendung der den einzelnen Arbeitsvorgängen zugeordneten Steuerinformationen kann ein Arbeitsablauf ausgeführt werden, auch wenn die über die zweite Schnittstelle empfangenen Daten den Arbeitsablauf nur im Hinblick auf die von dem Arbeitsablauf umfassten Arbeitsvorgänge und die Verknüpfungen zwischen einzelnen Arbeitsvorgängen, beispielsweise in einer Beschreibungssprache, definieren. Die empfangenen Daten, die den Arbeitsablauf repräsentieren, können basierend auf den von der Vorrichtung selbst bereitgestellten Informationen erzeugt werden, da eine Umsetzung der Arbeitsvorgänge des Arbeitsablaufes in entsprechende Steuersignale unter Verwendung der gespeicherten Steuerinformationen erfolgen kann. Auf diese Weise kann die Implementierung neuer Arbeitsabläufe oder die Abänderung bereits implementierter Arbeitsabläufe erleichtert werden.

Als in ein optisches System einbettbare Vorrichtung wird eine Vorrichtung bezeichnet, deren wenigstens ein steuerbares Modul so in das optische System integriert werden kann, dass durch die Ausführung eines Arbeitsvorgangs durch das wenigstens eine steuerbare Modul der Zustand des optischen Systems beeinflusst werden kann, und deren Recheneinrichtung so bemessen und ausgestaltet ist, dass sie in das optische System integriert, werden kann, beispielsweise indem sie in das optische System verbaut wird.

Die Recheneinrichtung der Vorrichtung kann einen Speicher aufweisen, in dem die den ausführbaren Arbeitsvorgängen zugeordneten Steuerinformationen abgelegt sind. Bei einem Ausführungsbeispiel kann die Steuerinformation für einen Arbeitsvorgang in einem persistenten Speicher, beispielsweise einem Flash-Speicher, desjenigen steuerbaren Moduls abgelegt sein, von dem der entsprechende Arbeitsvorgang ausgeführt werden kann. In diesem Fall kann die Recheneinrichtung eingerichtet sein, um vor Ausführung eines Arbeitsablaufes, beispielsweise bei einem Systemstart, die Steuerinformationen über die wenigstens eine erste Schnittstelle in einen Arbeitsspeicher oder einen persistenten Speicher der Recheneinrichtung zu laden.

Bei einem weiteren Ausführungsbeispiel kann die Recheneinrichtung einen Speicher aufweisen, in dem die den ausführbaren Arbeitsvorgängen zugeordneten Steuerinformationen persistent gespeichert sind.

Wenigstens ein steuerbares Modul des wenigstens einen steuerbaren Moduls kann ausgewählt sein aus einer Gruppe umfassend eine Verstelleinrichtung zum Verstellen einer Tischposition, eine Verstelleinrichtung zum Verstellen wenigstens einer Linse, eine Verstelleinrichtung zum Verstellen eines Objektivrevolvers, eine Verstelleinrichtung zum Verstellen eines Reflektorrevolvers, eine Verstelleinrichtung für eine Blende, einen Shutter, eine Objektbeleuchtung, eine Lasersteuerung, einen Sensor, beispielsweise einen Temperatursensor, eine Einrichtung zur Magazinpositionierung und eine Slide-Greifer-Einrichtung. Die Vorrichtung kann wenigstens zwei oder mehr steuerbare Module umfassen, von denen jedes aus der vorgenannten Gruppe ausgewählt ist.

Die Recheneinrichtung kann als Mikro-Controller ausgestaltet sein.

Die Recheneinrichtung derart eingerichtet ist, dass die über die zweite Schnittstelle ausgegebenen Informationen eine deskriptive Beschreibung der von dem wenigstens einen steuerbaren Modul ausführbaren Arbeitsvorgänge umfassen. Die Beschreibung kann beispielsweise einen Namen der jeweiligen Arbeitsvorgänge oder eine Beschreibung der durch Ausführung des Arbeitsvorgangs erzielten Wirkung beinhalten. Dadurch wird es möglich, die Informationen über die Arbeitsvorgänge an einer zweiten Recheneinrichtung, beispielsweise einem mit der Recheneinrichtung gekoppelten Host-Rechner zu empfangen, und dort die deskriptive Beschreibung für einen Benutzer oder Entwickler bereitzustellen. Für einen Benutzer oder Entwickler verständliche Informationen, die für den Entwurf von Arbeitsabläufen nützlich oder notwendig sind, können somit selbst dann bereitgestellt werden, wenn der Host-Rechner vorab keine Kenntnis über die Konfiguration der Vorrichtung hat.

Die Recheneinrichtung kann derart eingerichtet sein, dass die über die zweite Schnittstelle ausgegebenen Informationen für wenigstens einen Arbeitsvorgang, vorteilhaft für alle Arbeitsvorgänge der von dem wenigstens einen steuerbaren Modul ausführbaren Arbeitsvorgänge, Informationen über Eingangsparameter oder Informationen über Ausgangsparameter oder Informationen über Randbedingungen des entsprechenden Arbeitsvorgangs umfassen. Dabei sind Kombinationen der Informationen über Eingangsparameter, Informationen über Ausgangsparameter oder Informationen über Randbedingungen mit umfasst, d.h., die Informationen über die Arbeitsvorgänge können beispielsweise sowohl Informationen über Eingangsparameter als auch Informationen über Ausgangsparameter als auch Informationen über Randbedingungen der Arbeitsvorgänge umfassen. Als Eingangsparameter wird dabei ein Parameter bezeichnet, von dem die Durchführung des Arbeitsvorgangs durch das entsprechende Modul abhängt. Als Ausgangsparameter wird ein Parameter bezeichnet, der als Antwort auf die Ausführung des Arbeitsvorgangs durch das Modul bereitgestellt wird. Als Randbedingung wird eine Bedingung bezeichnet, von der die Durchführbarkeit oder Art der Durchführung eines Arbeitsvorgangs abhängt. Durch diese Ausgestaltung können die Informationen über Eingangsparameter, Ausgangsparameter oder Randbedingungen, die für den Entwurf von Arbeitsabläufen nützlich oder notwendig sind, an einer weiteren Recheneinrichtung für einen Benutzer bereitgestellt werden.

Die Recheneinrichtung umfasst einen Speicher, in dem ein maschinenlesbarer Code gespeichert ist. Der Speicher kann ein persistenter Speicher, z.B. ein Flash-Speicher, oder ein nicht-persistenter Speicher, z.B. ein Arbeitsspeicher, sein. Der maschinenlesbare Code weist eine Mehrzahl von separaten Komponenten auf, von denen jede genau einem steuerbaren Modul des wenigstens einen steuerbaren Moduls zugeordnete ist. Für jedes steuerbare Modul des wenigstens einen steuerbaren Moduls ist die Information über die von dem entsprechenden steuerbaren Modul ausführbaren Arbeitsvorgänge und die diesen Arbeitsvorgängen zugeordneten Steuerinformationen in der Komponente des maschinenlesbaren Codes gespeichert sein, der dem entsprechenden steuerbaren Modul zugeordnet ist. Durch die Zuordnung von separaten Komponenten des maschinenlesbaren Codes und Modulen sind die Informationen über die Arbeitsvorgänge eines Moduls und die entsprechenden Steuerinformationen in einer Komponente des maschinenlesbaren Codes und logisch separat von den Informationen zu Arbeitsvorgängen, die andere Module betreffen, vorgesehen. Dies erleichtert die Änderung der Informationen über die Arbeitsvorgänge und der Steuerinformationen.

Bei einem Ausführungsbeispiel können die Komponenten des maschinenlesbaren Codes beispielsweise Klassen einer objektorientierten Programmiersprache sein. Die Steuerinformationen können in den Komponenten des maschinenlesbaren Codes beispielsweise als ausführbarer Code, z.B. in Assembler, hinterlegt sein.

Die Recheneinrichtung kann eingerichtet sein, um bei einer Modifizierung eines steuerbaren Moduls des wenigstens einen steuerbaren Moduls nur Daten in derjenigen Komponente des maschinenlesbaren Codes anzupassen, die dem modifizierten steuerbaren Modul zugeordnet ist. Eine Modifizierung des wenigstens einen Moduls kann beispielsweise vorliegen, wenn in einem Modul neue Funktionen implementiert oder bestehende Funktionen entfernt werden, wenn ein neues Modul hinzugefügt oder ein Modul entfernt wird. Durch die selektive Anpassung von Daten nur in einer der Komponenten des maschinenlesbaren Codes wird der für die Anpassung der Recheneinrichtung an die neue Konfiguration der Module erforderliche Aufwand verringert. Falls die Modifizierung des wenigstens einen steuerbaren Moduls nur die über die wenigstens eine erste Schnittstelle ausgegebenen Steuerbefehle, nicht aber die verfügbaren Arbeitsvorgänge oder deren Parameter beeinflusst, können bei einer Modifizierung des wenigstens einen steuerbaren Moduls die Daten, die die Arbeitsabläufe definieren, unverändert bleiben.

Die Recheneinrichtung kann eingerichtet sein, um bei einer Modifizierung des wenigstens einen steuerbaren Moduls über die wenigstens eine erste Schnittstelle oder die zweite Schnittstelle eine Information über einen von dem modifizierten wenigstens einen steuerbaren Modul ausführbaren Arbeitsvorgang zu empfangen und in einem Speicher der Recheneinrichtung zu speichern. Falls in dem Speicher mehrere Komponenten eines maschinenlesbaren Codes, die jeweils genau einem Modul zugeordnet sind, gespeichert sind, kann die Information über den von dem modifizierten Modul ausführbaren Arbeitsvorgang spezifisch in derjenigen Komponente des maschinenlesbaren Codes gespeichert werden, die dem modifizierten Modul zugeordnet ist. Falls die Information über den von dem modifizierten wenigstens einen steuerbaren Modul ausführbaren Arbeitsvorgang über die wenigstens eine erste Schnittstelle empfangen wird, ist eine Aktualisierung der Konfiguration der Recheneinrichtung abhängig von von dem modifizierten Modul selbst bereitgestellten Daten möglich.

Die Recheneinrichtung kann eingerichtet sein, um für jeden Arbeitsvorgang des Arbeitsablaufes einen Steuerbefehl abhängig von der dem Arbeitsvorgang zugeordneten Steuerinformation zu erzeugen. Falls der Arbeitsvorgang einen Eingangsparameter aufweist, kann die Recheneinrichtung eingerichtet sein, um den Steuerbefehl weiterhin abhängig von einem Parameterwert zu erzeugen. Der Steuerbefehl kann weiterhin abhängig von einer in den Daten angegebenen Verknüpfung zwischen Arbeitsvorgängen erzeugt werden, beispielsweise durch eine vorwärtsgerichtete oder rückwärtsgerichtete Abarbeitung des Arbeitsablaufes. Der Steuerbefehl kann beispielsweise in der Form von ausführbarem Code als Steuerinformation in dem Speicher abgelegt sein. Die entsprechende Komponente des maschinenlesbaren Codes kann den ausführbaren Code ggf. mit einem Parameterwert ausfüllen, um das entsprechende Modul zu steuern. Da die Umsetzung der empfangenen Daten, die den Arbeitsablauf repräsentieren, in Steuerbefehle durch die Recheneinrichtung anhand der Steuerinformation erfolgt, wird das Fehlermanagement erleichtert, da eine Zuordnung zu einem Modul bzw. Arbeitsvorgang erleichtert wird.

Falls bei der Abarbeitung eines Arbeitsablaufes ein Parameterwert übergeben werden muss, der nicht von einem vorhergehenden Arbeitsvorgang als Ausgangsparameter geliefert wird, kann der erforderliche Parameterwert auf verschiedene Weise erhalten werden. Nach einer Ausgestaltung kann der Parameterwert in den über die zweite Schnittstelle empfangenen Daten enthalten sein. Nach einer weiteren Ausgestaltung kann der Parameterwert über eine Benutzerschnittstelle, die mit der Recheneinrichtung gekoppelt und ebenfalls in das optische System eingebettet ist, eingegeben werden.

In dem Speicher können für die Mehrzahl von Arbeitsvorgänge des Arbeitsablaufes jeweils Informationen über das Verhalten des Moduls, von dem der Arbeitsvorgang ausführbar ist, bei Ausführung des Arbeitsvorgangs gespeichert sein. In dem Speicher können derartige Informationen über das Verhalten für alle Arbeitsvorgänge gespeichert sein, die von dem wenigstens einen Modul ausführbar sind. Die Informationen über das Verhalten können beispielsweise Informationen über Verzögerungszeiten, Informationen über für einen Arbeitsvorgang, ggf. in Abhängigkeit von einem Parameter, benötigte Ausführungszeiten oder dergleichen umfassen. Dadurch kann das Verhalten des wenigstens einen Moduls so in der Recheneinrichtung abgebildet sein, dass eine realistische Simulation eines Arbeitsablaufes ohne Ansteuerung des Moduls bzw. der Module möglich ist.

Die Recheneinrichtung kann einen Simulationsmodus aufweisen. Die Recheneinrichtung kann eingerichtet sein, um bei Aktivierung des Simulationsmodus abhängig von den Informationen über das Verhalten eine Durchführung des Arbeitsablaufes zu simulieren. Dadurch kann der Arbeitsablauf überprüft werden. Bei einer Ausgestaltung kann ein Fortschreiten bei der Simulation über die zweite Schnittstelle berichtet werden. Bei einer weiteren Ausgestaltung können bei der Simulation auftretende Fehler protokolliert und das Protokoll über die zweite Schnittstelle ausgegeben werden. Dadurch wird die Identifizierung von Fehlern erleichtert.

Falls die Recheneinrichtung einen Simulationsmodus aufweist, kann das Fortschreiten der Simulation protokolliert werden. Bei der tatsächlichen Ausführung des Arbeitsablaufes kann die Recheneinrichtung das Fortschreiten bei der Abarbeitung des Arbeitsablaufes mit der protokollierten Simulation vergleichen. So können Fehler frühzeitig erkannt werden.

Die Recheneinrichtung kann eingerichtet sein, um zu überprüfen, ob die Mehrzahl von Arbeitsvorgängen des Arbeitsablaufes eine Arbeitsvorgang umfasst, der von dem wenigstens einen steuerbaren Modul nicht ausführbar ist. Die Recheneinrichtung kann so eingerichtet sein, dass sie eine derartige Überprüfung unabhängig davon durchführen kann, ob die Recheneinrichtung einen Simulationsmodus aufweist. Die Recheneinrichtung kann eingerichtet sein, um eine entsprechende Fehlermeldung über die zweite Schnittstelle auszugeben, falls der Arbeitsablauf einen nicht ausführbaren Arbeitsvorgang umfasst. Die von der Recheneinrichtung erzeugte Fehlermeldung kann Informationen dazu enthalten, warum basierend auf den in der Recheneinrichtung vorhandenen Informationen über die verfügbaren Arbeitsvorgänge der Arbeitsablauf nicht ausführbar ist. Auf diese Weise kann vermieden werden, dass in der Recheneinrichtung Arbeitsabläufe implementiert werden, die von den steuerbaren Modulen nicht ausführbar sind.

Bei allen vorgenannte Aspekten und Ausführungsbeispielen kann die Recheneinrichtung eingerichtet sein, um die empfangenen Daten zu speichern. Insbesondere muss die Recheneinrichtung nicht unmittelbar nach Empfangen der Daten das wenigstens eine steuerbare Modul steuern, um den Arbeitsablauf auszuführen. Vielmehr kann bei einem Ausführungsbeispiel der Arbeitsablauf in einem persistenten Speicher der Recheneinrichtung gespeichert werden. Die Ausführung des Arbeitsablaufes kann dann beispielsweise als Antwort auf eine Benutzereingabe erfolgen.

Nach einem weiteren Aspekt wird eine Anordnung für ein optisches System, insbesondere für ein Mikroskopsystem, angegeben. Die Anordnung umfasst eine Vorrichtung nach einem Aspekt oder Ausführungsbeispiel und eine weitere Recheneinrichtung, die mit der zweiten Schnittstelle der Recheneinrichtung gekoppelt ist. Die weitere Recheneinrichtung kann eingerichtet sein, um abhängig von den von der Recheneinrichtung ausgegebenen Informationen über die Arbeitsvorgänge die benutzerdefinierte Festlegung des Arbeitsablaufes zu ermöglichen.

Wie bereits erläutert wurde, erlaubt die Ausgabe der Informationen über die verfügbaren Arbeitsvorgänge von der Recheneinrichtung an die weitere Recheneinrichtung, die beispielsweise ein Host-Rechner sein kann, dass der Benutzer über den Host-Rechner alle Informationen erhält, die für die Erstellung eines Ablaufplans eines Arbeitsablaufes erforderlich sind. Dies gilt selbst dann, wenn der Host-Rechner vorab keine Information über die Vorrichtung und ihre Module hatte.

Die weitere Recheneinrichtung kann einen grafischen Editor umfassen, der die Darstellung eines grafischen Ablaufplans und seine Änderung durch den Benutzer erlaubt.

Die weitere Recheneinrichtung kann eingerichtet sein, um den benutzerdefiniert festgelegten Arbeitsablauf automatisch in die Daten, die den Arbeitsablauf repräsentieren, umzusetzen. Die Umsetzung kann derart erfolgen, dass die Daten den Arbeitsablauf deskriptiv, d.h. unter Bezugnahme auf die von ihm umfassten Arbeitsvorgänge und ihre Verknüpfungen, wiedergeben.

Nach einem weiteren Aspekt wird ein optisches System, insbesondere Mikroskopsystem, angegeben, das die Vorrichtung nach einem der Aspekte oder Ausführungsbeispiele umfasst. Die Vorrichtung ist dabei in das optische System eingebettet, d.h. durch in das optische System integrierte Bauteile ausgebildet.

Nach einem weiteren Aspekt wird ein Verfahren zum Steuern wenigstens eines steuerbaren Moduls eines optischen Systems, insbesondere eines Mikroskopsystems, angegeben. Bei dem Verfahren gibt eine mit dem wenigstens einen steuerbaren Modul gekoppelte und in das optische System eingebettete Recheneinrichtung Informationen über Arbeitsvorgänge, die von dem wenigstens einen steuerbaren Modul ausführbar sind, über eine Schnittstelle aus. Die Recheneinrichtung empfängt über die Schnittstelle Daten, die einen eine Mehrzahl von Arbeitsvorgängen umfassenden Arbeitsablauf repräsentieren. Abhängig von den empfangenen Daten für die Mehrzahl von Arbeitsvorgängen des Arbeitsablaufes setzt die Recheneinrichtung jeweils eine dem entsprechenden Arbeitsvorgang zugeordnete Steuerinformation um, um abhängig von den Steuerinformationen das wenigstens eine steuerbare Modul zu steuern.

Wie unter Bezugnahme auf die Vorrichtung erläutert wurde, erlaubt es ein derartiges Verfahren, dass die für die Entwicklung neuer Arbeitsabläufe oder für die Abänderung in der Vorrichtung implementierter Arbeitsabläufe erforderlichen Informationen von der Vorrichtung selbst bereitgestellt werden. Durch diese Verwendung der den einzelnen Arbeitsvorgängen zugeordneten Steuerinformationen kann ein Arbeitsablauf ausgeführt werden, auch wenn die über die zweite Schnittstelle empfangenen Daten den Arbeitsablauf nur im Hinblick auf die von dem Arbeitsablauf umfassten Arbeitsvorgänge und die Verknüpfungen zwischen einzelnen Arbeitsvorgängen, z.B. in einer Beschreibungssprache, definieren. Auf diese Weise kann die Implementierung neuer Arbeitsabläufe oder die Abänderung bereits implementierter Arbeitsabläufe erleichtert werden.

Bei dem Verfahren können die ausgegebenen Informationen über die Arbeitsvorgänge eine deskriptive Beschreibung der Arbeitsvorgänge umfassen. Dadurch wird die benutzerdefinierte Erstellung von Arbeitsabläufen erleichtert.

Die ausgegebenen Informationen über die Arbeitsvorgänge können an einer weiteren Recheneinrichtung empfangen und über eine Benutzerschnittstelle insbesondere über eine grafische Benutzeroberfläche, ausgegeben werden. Die weitere Recheneinrichtung kann die Daten, die den Arbeitsablauf repräsentieren, abhängig von einer Benutzereingabe erzeugen.

Die Recheneinrichtung kann einen Speicher mit einem darin gespeicherten maschinenlesbaren Code umfassen, der mehrere separate Komponenten aufweist, von denen jede genau einem steuerbaren Modul zugeordnet ist. In der einem steuerbaren Modul zugeordneten Komponente des maschinenlesbaren Codes können die Informationen über die Arbeitsvorgänge, die von dem entsprechenden steuerbaren Modul ausführbar sind, und die zugeordneten Steuerinformationen für diese Arbeitsvorgänge gespeichert sein. Die Steuerinformationen, die den einzelnen Arbeitsvorgängen zugeordnet sind, können wenigstens bei Ausführung des Arbeitsablaufes in dem Speicher der Recheneinrichtung gespeichert sein.

Wenn die Recheneinrichtung einen derartigen Speicher mit mehreren Komponenten eines maschinenlesbaren Codes aufweist, kann die Recheneinrichtung, wenn das wenigstens eine steuerbare Modul modifiziert wird, eine Änderung der Daten nur in derjenigen Komponente des maschinenlesbaren Codes vornehmen, der dem modifizierten Modul zugeordnet ist.

Die Recheneinrichtung kann einen Speicher umfassen, in dem für die Mehrzahl von Arbeitsvorgängen des Arbeitsablaufes jeweils Informationen über das Verhalten des Moduls, von dem der Arbeitsvorgang ausführbar ist, gespeichert sind. Die Recheneinrichtung kann einen Simulationsmodus aufweisen. Wenn der Simulationsmodus aktiviert ist, simuliert die Recheneinrichtung abhängig von den Informationen über das Verhalten eine Durchführung des Arbeitsablaufes.

Bei dem Verfahren nach einem der hier beschriebenen Aspekte oder Ausführungsbeispiele kann wenigstens ein steuerbares Modul des wenigstens einen steuerbaren Moduls ausgewählt sein aus einer Gruppe umfassend eine Verstelleinrichtung zum Verstellen einer Tischposition, eine Verstelleinrichtung zum Verstellen wenigstens einer Linse, eine Verstelleinrichtung zum Verstellen eines Objektivrevolvers, eine Verstelleinrichtung zum Verstellen eines Reflektorrevolvers, eine Verstelleinrichtung für eine Blende, einen Shutter, eine Objektbeleuchtung, eine Lasersteuerung, einen Sensor, beispielsweise einen Temperatursensor, eine Einrichtung zur Magazinpositionierung und eine Slide-Greifer-Einrichtung. Die Vorrichtung kann wenigstens zwei oder mehr steuerbare Module umfassen, von denen jedes aus der vorgenannten Gruppe ausgewählt ist.

Das Verfahren kann mit der Vorrichtung nach irgendeinem der hier beschrieben Aspekte oder Ausführungsbeispiele durchgeführt werden.

Während die Vorrichtungen und Verfahren nach verschiedenen Aspekten und Ausführungsbeispielen im Hinblick auf die Steuerung wenigstens eines steuerbaren Moduls beschrieben werden, kann die Vorrichtung insbesondere eine Mehrzahl von steuerbaren Modulen aufweisen und kann das Verfahren insbesondere zur Steuerung einer Mehrzahl von steuerbaren Modulen verwendet werden.

Bei den Vorrichtungen und Verfahren nach jedem der oben beschriebenen Aspekte und Ausführungsbeispiele kann die Recheneinrichtung die Informationen über die von dem wenigstens einen steuerbaren Modul ausführbaren Arbeitsvorgänge in einer Beschreibungssprache ausgeben. Weiterhin kann die Recheneinrichtung so eingerichtet sein, dass die empfangenen Daten, die den Arbeitsablauf repräsentieren, ebenfalls in der Beschreibungssprache vorliegen.

Bei den Vorrichtungen und Verfahren können die Informationen über die Arbeitsvorgänge in einer Beschreibungssprache in dem Speicher hinterlegt sein. Falls in dem Speicher Informationen über das Verhalten der Module bei Ausführung von Arbeitsvorgängen hinterlegt sind, können diese ebenfalls in der Beschreibungssprache vorliegen.

Als Beschreibungssprache - synonym verwendet zu Auszeichnungssprache (engl. "Markup Language") - wird dabei nach herkömmlichem Verständnis eine Sprache verstanden, die zur Beschreibung von Daten und ggf. zur Beschreibung von Verfahren, die zur Verarbeitung der Daten durchgeführt werden, dient. Beispielsweise kann die Beschreibungssprache in XML oder SGML definiert sein.

Die Vorrichtungen und Verfahren nach verschiedenen Ausführungsbeispielen der Erfindung können allgemein in optischen Systemen eingesetzt werden. Ein beispielhaftes Anwendungsfeld sind Mikroskopsysteme, beispielsweise Slide-Scanner, wobei die Vorrichtungen und Verfahren nach verschiedenen Ausführungsbeispielen nicht auf diese Anwendungen beschränkt sind.

Ausführungsbeispiele der Erfindung werden nachfolgend unter Bezugnahme auf die beigefügte Zeichnung näher erläutert.
Fig. 1 ist eine schematische Blockdarstellung eines optischen Systems mit einer Vorrichtung nach einem Ausführungsbeispiel, wobei eine weitere Recheneinrichtung mit der Vorrichtung gekoppelt ist.
Fig. 2 ist eine schematische Blockdarstellung einer Vorrichtung nach einem Ausführungsbeispiel.
Fig. 3 ist eine schematische Darstellung von Komponenten eines maschinenlesbaren Codes bei einer Vorrichtung nach einem Ausführungsbeispiel.
Fig. 4 ist eine Flussdiagrammdarstellung eines Verfahrens nach einem Ausführungsbeispiel.
Fig. 5 illustriert ein Anwendungsszenario einer Vorrichtung nach einem Ausführungsbeispiel.
Fig. 6 ist eine schematische Darstellung einer Benutzeroberfläche einer Anordnung nach einem Ausführungsbeispiel.
Fig. 7 ist eine schematische Darstellung einer Vorrichtung nach einem Ausführungsbeispiel.
Fig. 8A-8D illustrieren Komponenten eines maschinenlesbaren Codes in einem Speicher der Vorrichtung nach einem Ausführungsbeispiel.
Fig. 9 ist eine Flussdiagrammdarstellung einer Simulationsprozedur, die mit einer Vorrichtung nach einem Ausführungsbeispiel ausführbar ist.

Nachfolgend werden Ausführungsbeispiele der Erfindung näher erläutert. Die Merkmale der verschiedenen Ausführungsbeispiele können miteinander kombiniert werden, sofern dies in der nachfolgenden Beschreibung nicht ausdrücklich ausgeschlossen wird. Auch wenn einzelne Ausführungsbeispiele im Hinblick auf spezifische Anwendungen, beispielsweise im Kontext eines Mikroskopsystems, z.B. eines Slide-Scanners, beschrieben werden, ist die vorliegende Erfindung nicht auf diese Anwendungen beschränkt. Auch wenn im Kontext einiger Ausführungsbeispiele beispielhaft eine bestimmte Anzahl oder bestimmte Typen von steuerbaren Modulen beschrieben werden, können bei weiteren Ausführungsbeispielen eine andere Anzahl und/oder andere Arten von steuerbaren Modulen eingesetzt werden.

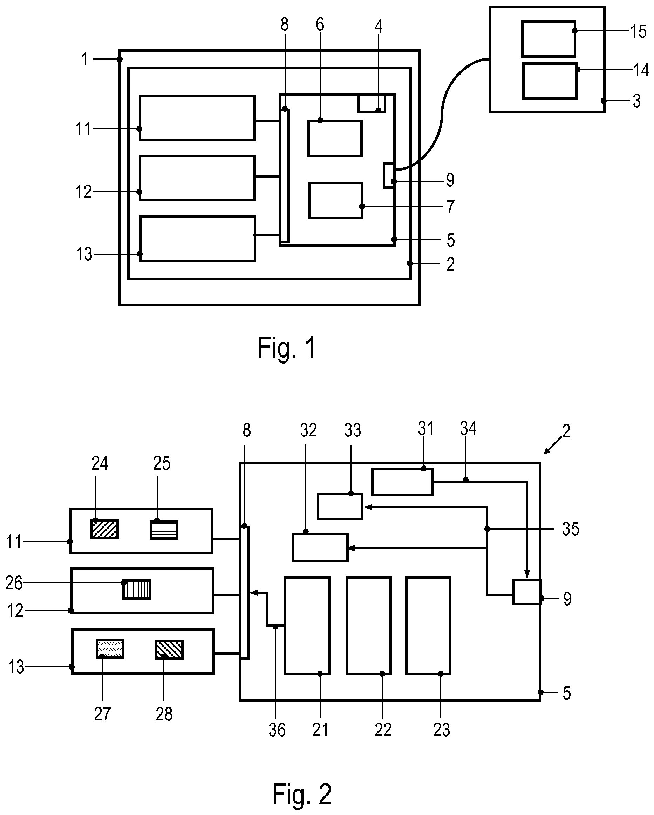

Fig. 1 ist eine schematische Blockdarstellung eines optischen Systems 1, das eine in das optische System 1 eingebettete Vorrichtung 2 umfasst. Die Vorrichtung 2 umfasst mehrere steuerbare Module 11-13 und eine mit diesen gekoppelte Recheneinrichtung 5 zum Steuern der Module 11-13. Die Recheneinrichtung 5 kann beispielsweise als Mikro-Controller ausgestaltet sein, der einen Prozessor oder mehrere Prozessoren umfassen kann.

Ebenfalls in Fig. 1 dargestellt ist eine weitere Recheneinrichtung 3, die beispielsweise ein Computer sein kann und die auch als Host-Rechner bezeichnet werden wird. Der Host-Rechner 3 kann mit der in das optische System 1 eingebetteten Recheneinrichtung 5 direkt oder indirekt, beispielsweise über einen Bus oder ein Lokalnetz, gekoppelt sein. Der Host-Rechner 3 ist extern von dem optischen System 1 vorgesehen. Die Vorrichtung 2 und der Host-Rechner 3 können so ausgebildet sein, dass die Verbindung zwischen dem Host-Rechner 3 und der in das optische System 1 eingebetteten Recheneinrichtung 5 auch im Nutzbetrieb des optischen Systems 1 bestehen bleibt. Nach einer anderen Ausgestaltung können die Vorrichtung 2 und der Host-Rechner 3 so ausgebildet sein, dass der Host-Rechner 3 wenigstens in einer Phase, in der neue Arbeitsabläufe der Vorrichtung 2 entwickelt, getestet und in der Vorrichtung 2 implementiert oder bestehende Arbeitsabläufe der Vorrichtung 2 geändert oder getestet werden, der Host-Rechner 3 mit der in das optische System 1 eingebetteten Recheneinrichtung 5 gekoppelt ist, die Verbindung zwischen dem Host-Rechner 3 und der in das optische System 1 eingebetteten Recheneinrichtung 5 im Nutzbetrieb, in dem die implementierten Arbeitsabläufe durchgeführt werden, aber nicht mehr bestehen muss.

Die in das optische System integrierte Recheneinrichtung 5 weist einen Prozessor 6 und einen Speicher 7 auf. Der Speicher 7 kann jede Ausgestaltung aufweisen, die eine Einbettung der Vorrichtung 2 in das optische System 1 zulässt. Beispielsweise kann der Speicher 7 einen oder mehrere von einem Halbleiterspeicher, einem persistenten Speicher, einem Flash-Speicher, einem Festplattenspeicher, einem wechselbaren Datenträger oder einer Kombination davon umfassen.

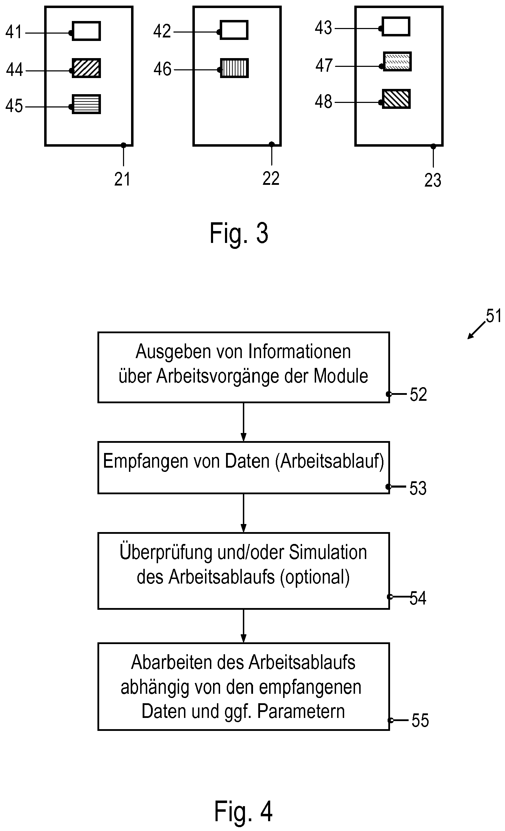

Die in das optische System 1 integrierte Recheneinrichtung 5 weist eine erste Schnittstelle 8 auf, über die die Recheneinrichtung 5 beispielsweise Steuerbefehle an die Module 11-13 ausgeben kann. Auch wenn in Fig. 1 schematisch nur eine erste Schnittstelle 8 dargestellt ist, können auch mehrere separate Schnittstellen zwischen der in das optische System 1 eingebetteten Recheneinrichtung 5 und den Modulen 11-13 vorhanden sein. Die in das optische System 1 integrierte Recheneinrichtung 5 weist weiterhin eine zweite Schnittstelle 9 auf, über die die Recheneinrichtung 5 Informationen an den Host-Rechner 3 ausgeben kann und Anfragen oder Daten von dem Host-Rechner 3 empfangen kann, wie unter Bezugnahme auf Fig. 4-8 noch näher beschrieben wird. Die in das optische System 1 integrierte Recheneinrichtung 5 kann weiterhin eine Benutzerschnittstelle 4 aufweisen, die beispielsweise ein in das optische System eingebettetes berührungsempfindliches Feld, z.B. einen Touchscreen, Tasten oder Knöpfe umfassen kann, mit denen ein Benutzer Parameter für die Durchführung eines in der Vorrichtung 2 implementierten Arbeitsablaufes eingeben oder einen von mehreren Arbeitsabläufen wählen kann.

Die Recheneinrichtung 5 ist so ausgestaltet, dass in dem Speicher 7 Informationen über die Module 11-13, insbesondere über die von den Modulen 11-13 ausführbaren Arbeitsvorgänge gespeichert sind. Die Informationen können beispielsweise für jeden der Arbeitsvorgänge einen Namen, eine deskriptive Beschreibung, Eingangs- und/oder Ausgangsparameter, mögliche Fehler, Randbedingungen und eine dem Arbeitsvorgang zugeordnete ID beinhalten. Diese Informationen oder ein Teil dieser Informationen können bzw. kann an den Host-Rechner 3 übertragen werden.

Der Host-Rechner 3 weist einen Prozessor 14 und eine Benutzerschnittstelle 15 auf. Der Host-Rechner 3 kann programmiertechnisch so eingerichtet sein, dass über die Benutzerschnittstelle wenigstens ein Teil der Informationen, die von der in das optische System 1 integrierten Recheneinrichtung 5 an den Host-Rechner 3 ausgegeben werden, für den Benutzer verfügbar gemacht werden. Der Host-Rechner 3 kann weiterhin so eingerichtet sein, dass ein über die Benutzerschnittstelle 15 benutzerdefiniert festgelegter Arbeitsablauf an die in das optische System 1 integrierte Recheneinrichtung 5 übertragen werden kann.

Die in das optische System 1 eingebettete Recheneinrichtung 5 kann die Module 11-13 so steuern, dass der Arbeitsablauf ausgeführt wird. Dazu kann die Recheneinrichtung 5 wiederum auf in dem Speicher 7 abgelegte Steuerinformationen zugreifen, die den Arbeitsvorgängen des Arbeitsablaufes zugeordnet sind. Die Ausführung des Arbeitsablaufes kann unmittelbar dann erfolgen, wenn die den Arbeitsablauf repräsentierenden Daten über die zweite Schnittstelle 9 von dem Host-Rechner 3 an die in das optische System 1 eingebettete Recheneinrichtung 5 übertragen werden. Alternativ oder zusätzlich können die den Arbeitsablauf repräsentierenden Daten auch in dem Speicher 7 abgelegt werden, so dass der Arbeitsablauf auch zu späteren Zeitpunkten erneut durchgeführt werden kann, selbst wenn der Host-Rechner 3 nicht mehr mit der Vorrichtung 2 verbunden sein sollte.

Zusätzlich können in dem Speicher 6 der Recheneinrichtung 5 auch weitere Informationen über das Verhalten der Module 11-13 bei Ausführung der jeweiligen Arbeitsvorgänge abgelegt sein. Diese Informationen können beispielsweise Informationen über Abarbeitungszeiten beinhalten. Die Informationen über das Verhalten können zu einer Simulation eines Arbeitsablaufes durch die Recheneinrichtung 5 verwendet werden. Alternativ oder zusätzlich können die Informationen über das Verhalten der Module auch über die zweite Schnittstelle 9 mit ausgegeben werden, um eine realistische Simulation eines Arbeitsablaufes durch den Host-Rechner 3 zu ermöglichen.

Nachfolgend wird der Austausch von Informationen über die Arbeitsvorgänge und von Daten, die einen Arbeitsablauf repräsentieren, über die zweite Schnittstelle 9 näher beschrieben.

Die Übermittlung von Informationen über ausführbare Arbeitsvorgänge von der eingebetteten Recheneinrichtung 5 an den Host-Rechner 3 und von Daten, die einen Arbeitsablauf repräsentieren, von dem Host-Rechner 3 an die eingebettete Recheneinrichtung 5 ist an den verfügbaren Arbeitsvorgängen orientiert. Beispielsweise können die Informationen über die Arbeitsabläufe, die von der eingebetteten Recheneinrichtung 5 ausgegeben werden, die Arbeitsabläufe in einer Beschreibungssprache beschreiben. Die Daten, die den Arbeitsablauf repräsentieren und von dem Host-Rechner an die eingebettete Recheneinrichtung 5 übertragen werden, können den Arbeitsablauf durch die Arbeitsvorgänge, aus denen der Arbeitsablauf besteht, und Verknüpfungen zwischen den Arbeitsvorgängen, beispielsweise ebenfalls in einer Beschreibungssprache, beschreiben.

Die in das optische System 1 eingebettete Recheneinrichtung 5 ist derart ausgestaltet, dass sie die über die zweite Schnittstelle 9 empfangenen Daten interpretieren kann, die einen Arbeitsablauf nicht als vollständig kompilierten Befehlscode, sondern als Kombination von Arbeitsvorgängen und Verknüpfungen zwischen den Arbeitsvorgängen definieren. Die Verknüpfungen können beispielsweise Bedingungen für den Beginn der Abarbeitung eines Arbeitsvorgangs oder Parameterübergaben zwischen Arbeitsvorgängen beinhalten. Die Daten können den Arbeitsablauf in einer Beschreibungssprache repräsentieren, und die eingebettete Recheneinrichtung 5 kann mit einem Interpreter für die Beschreibungssprache ausgestattet sein, um abhängig von den den Arbeitsablauf repräsentierenden Daten Steuerbefehle für die Module 11-13 zu erzeugen.

Informationen über die von den Modulen 11-13 ausführbaren Arbeitsvorgänge können in dem Speicher 7 ebenfalls in einer Beschreibungssprache gespeichert und von der in das optische System 1 eingebetteten Recheneinrichtung 5 über die Schnittstelle 9 ausgegeben werden. Auf dem Host-Rechner 3 können die Arbeitsvorgänge zu einem Arbeitsablauf zusammengesetzt werden, der dann - wiederum in der Beschreibungssprache - an die in das optische System 1 eingebettete Recheneinrichtung 5 übertragen werden kann.

Die eingebettete Recheneinrichtung 5 und der Host-Rechner 3 sind so eingerichtet, dass sie jeweils die in dem Speicher 7 der Recheneinrichtung 5 hinterlegte Informationen über Arbeitsvorgänge und die Daten, die den Arbeitsablauf repräsentieren, interpretieren können. Die eingebettete Recheneinrichtung 5 und der Host-Rechner 3 können jeweils so eingerichtet sein, dass sie die Beschreibungssprache interpretieren können, in der die Informationen über die Arbeitsvorgänge und die Daten, die den Arbeitsablauf repräsentieren, vorliegen können.

Verschiedene Vorteile können mit der an Arbeitsvorgängen orientierten Beschreibung erzielt werden. Falls eine Fehlerkorrektur oder Erweiterung eines Arbeitsablaufes erforderlich ist, ist es typischerweise ausreichend, an dem Host-Rechner 3 den Arbeitsablauf, d.h. den Ablaufplan, der durch Arbeitsvorgänge und ihre Verknüpfungen definiert ist, zu ändern und an die eingebettete Recheneinrichtung 5 zu übertragen. Es ist nicht erforderlich, einen vollständig kompilierten Befehlscode zu erzeugen und das Kompilat zu validieren. Falls eines der Module 11-13 modifiziert oder ein neues Modul in das optische System eingebaut wird, kann dies durch eine entsprechende Änderung der in dem Speicher 7 hinterlegten Informationen über die Arbeitsvorgänge und/oder Steuerinformationen berücksichtigt werden, ohne dass der Arbeitsablauf notwendig geändert werden muss. Dies kann beispielsweise der Fall sein, wenn ein Motor eines der Module 11-13 zusätzlich zu einer normalen Geschwindigkeit auch einen Modus mit höherer oder niedrigerer Geschwindigkeit erhält. Auch hier kann die Erstellung und Validierung eines vollständig kompilierten Befehlscodes auf dem Host-Rechner 3 entfallen.

Wenn die eingebettete Recheneinrichtung 5 Informationen über die von den Modulen 11-13 ausführbaren Arbeitsvorgänge über die zweite Schnittstelle 9 ausgibt, kann der Host-Rechner 3 auf diese Weise eine Beschreibung der von der eingebetteten Vorrichtung 2 ausführbaren Arbeitsvorgänge und deren Attribute, wie Ein- und Ausgangsparametern und/oder Randbedingungen, erhalten. Die Ausgabe dieser Informationen über die Benutzerschnittstelle 14 des Host-Rechners 3 und ihre Verwendung zur Erstellung eines Ablaufplans für einen Arbeitsablauf ist somit selbst dann möglich, wenn der Host-Rechner 3 zuvor keine Kenntnisse über die Konfiguration der eingebetteten Vorrichtung 2 hatte. Die eingebettete Vorrichtung 2 kann somit sich selbst beschreiben.

Wenn Arbeitsabläufe, die in der Vorrichtung 2 eines optischen Systems implementiert wurden, für ein anderes optisches System mit einer anderen Konfiguration, beispielsweise mit anderen Elektronikeinheiten, angepasst werden sollen, kann dies durch eine entsprechende Abänderung der Daten geschehen, die den Arbeitsablauf in einer Beschreibungssprache definieren. Die Erzeugung und Validierung eines entsprechend geänderten Kompilats kann so vermieden werden.

Zur weiteren Veranschaulichung der unter Bezugnahme auf Fig. 1 beschriebenen Vorrichtung 2, die in das optische System 1 eingebettet ist, werden Verwendungen und Ausgestaltungen der Vorrichtung 2 nach verschiedenen Ausführungsbeispielen nachfolgend illustriert.

Das optische System 1 kann beispielsweise ein Mikroskopsystem, z.B. ein Slide-Scanner, sein.

Die Module 11-13 der eingebetteten Vorrichtung 2 können beispielsweise Elektronikeinheiten sein. Beispiele für derartige Module sind eine Verstelleinrichtung zum Verstellen einer Tischposition, eine Verstelleinrichtung zum Verstellen wenigstens einer Linse, eine Verstelleinrichtung zum Verstellen eines Objektivrevolvers, eine Verstelleinrichtung zum Verstellen eines Reflektorrevolvers, eine Verstelleinrichtung für eine Blende, ein Shutter, eine Objektbeleuchtung, eine Lasersteuerung, ein Sensor, beispielsweise ein Temperatursensor, eine Einrichtung zur Magazinpositionierung oder eine Slide-Greifer-Einrichtung.

Jedes der Module kann einen oder mehrere Arbeitsvorgänge ausführen. Beispielsweise kann die Verstelleinrichtung zum Verstellen der Tischposition einen ersten Arbeitsvorgang zum Verfahren eines Mikroskoptisches in einer ersten Raumrichtung (z.B. x), einen zweiten Arbeitsvorgang zum Verfahren des Mikroskoptisches in einer zweiten Raumrichtung (z.B. y) und einen dritten Arbeitsvorgang zum Verfahren des Mikroskoptisches in einer zweiten Raumrichtung (z.B. z) aufweisen. Ein Sensor kann als Arbeitsvorgang die Durchführung einer Messung und Ausgabe des Messergebnisses aufweisen. Eine Einrichtung zur Magazinpositionierung eines Slide-Scanners kann als Arbeitsvorgänge eine Verschiebung bis zu einer bestimmten Slide, das Öffnen und das Schließen einer Halterung aufweisen. Eine Slide-Greifer-Einrichtung eines Slide-Scanners kann als Arbeitsvorgänge eine Verschiebung des Greifers bis zu einer bestimmten Position, ein Ergreifen einer Slide und ein Loslassen einer Slide umfassen.

Die verschiedenen Arbeitsvorgänge können einen Eingangsparameter und/oder einen Ausgangsparameter aufweisen. Beispielsweise kann der Arbeitsvorgang des Verstellens eines Mikroskoptisches in der ersten Raumrichtung als Eingangsparameter eine gewünschte Endposition oder eine Distanz, um die der Tisch verschoben werden soll, umfassen. Der Arbeitsvorgang der Verschiebung einer Einrichtung zur Magazinpositionierung oder einer Slide-Greifer-Einrichtung kann eine Distanz, um die die Verschiebung erfolgen soll, oder eine Endposition als Eingangsparameter umfassen. Der Arbeitsvorgang der Durchführung einer Messung durch einen Sensor hat nicht notwendig einen Eingangsparameter, aber das Messergebnis als Ausgangsparameter.

Die genannten Module, Arbeitsvorgänge und Parameter sind nur illustrativ, und andere Module mit anderen Arbeitsvorgängen können gemäß den hier beschriebenen Prinzipien von der eingebetteten Recheneinrichtung 5 gesteuert werden.

Wie unter Bezugnahme auf Fig. 1 beschrieben wurde, sind die Module 11-13 in der eingebetteten Recheinrichtung 5 derart abgebildet, dass die Recheneinrichtung 5 wenigstens über Informationen über die von den Modulen 11-13 ausführbaren Arbeitsvorgänge, die zur Beschreibung der Module 11-13 über die zweite Schnittstelle 9 ausgegeben werden können, und über Steuerinformationen verfügt, auf deren Basis die Module 11-13 über die erste Schnittstelle 8 in Abhängigkeit von den Daten, die den Arbeitsablauf repräsentieren, gesteuert werden können. Unter Bezugnahme auf Fig. 2 und 3 wird die Verwaltung der Daten und die verschiedenen in der Recheneinrichtung 5 implementierten Funktionen näher beschrieben.

Fig. 2 ist eine schematische Darstellung der eingebetteten Recheneinrichtung 5 und der Module 11-13, wobei Funktionsblöcke 31, 32 der Recheneinrichtung 5 und verschiedene Komponenten 21-23 eines in einem Speicher der Recheneinrichtung 5 abgelegten maschinenlesbaren Codes und eine Datei 33 dargestellt sind, um die Funktionsweise der Recheneinrichtung 5 weiter zu erläutern. Die Funktionsblöcke 31, 32 können durch Firmware in der eingebetteten Recheneinrichtung 5 implementiert sein, die durch den Prozessor 6 ausgeführt wird. Die Komponenten 21-23 des maschinenlesbaren Codes müssen nicht persistent in einem Speicher der Recheneinrichtung 5 gespeichert sein, sondern können beispielsweise bei Start des Systems, in das die Vorrichtung eingebettet ist, aus persistenten Speicher, z.B. Flash-Speichern, der Module 11-13 über die erste Schnittstelle 8 abgerufen werden.

Die Komponenten 21-23 des maschinenlesbaren Codes und die Datei 33 müssen nicht in physisch separaten Abschnitten des Speichers 7 gespeichert sein, sind jedoch separat ansprechbar und separat modifizierbar. Entsprechend sind die Komponenten 21-23 zur Veranschaulichung als separate Blöcke dargestellt, die sich im Hinblick auf die darin gespeicherten Daten unterscheiden, wobei der Prozessor 6 der Recheneinrichtung 5 die verschiedenen Komponenten 21-23 separat aufrufen oder separat auf die darin abgelegten Informationen zugreifen kann. Die Komponenten 21-23 des maschinenlesbaren Codes können beispielsweise verschiedene Komponenten der Firmware der eingebetteten Recheneinrichtung 5 sein.

Wie unter Bezugnahme auf Fig. 3 noch näher beschrieben wird, sind in der ersten Komponente 21 nur Informationen über Arbeitsvorgänge des ersten Moduls 11, Steuerinformationen zum Ansteuern des ersten Moduls 11 und ggf. Informationen über das Verhalten des ersten Moduls 11 bei der Ausführung der Arbeitsvorgänge enthalten. Diese Informationen können wenigstens teilweise in einer Beschreibungssprache, beispielsweise auf der Basis von XML, vorliegen. Ähnlich sind in der zweiten Komponente 22 nur Informationen über Arbeitsvorgänge des zweiten Moduls 12, Steuerinformationen zum Ansteuern des zweiten Moduls 12 und ggf. Informationen über das Verhalten des zweiten Moduls 12 bei der Ausführung der Arbeitsvorgänge enthalten. Diese Informationen können wenigstens teilweise in einer Beschreibungssprache, beispielsweise auf der Basis von XML, vorliegen. Ähnlich sind in der dritten Komponente 23 nur Informationen über Arbeitsvorgänge des dritten Moduls 13, Steuerinformationen zum Ansteuern des dritten Moduls 13 und ggf. Informationen über das Verhalten des dritten Moduls 13 bei der Ausführung der Arbeitsvorgänge abgelegt. Diese Informationen können wenigstens teilweise in einer Beschreibungssprache, beispielsweise auf der Basis von XML, vorliegen.

Der Funktionsblock 31 ist in der Recheneinrichtung 5 zum Datenaustausch mit dem Host-Rechner 3 vorgesehen und wird nachfolgend als Beschreibungseinheit bezeichnet. Die Beschreibungseinheit 31 kann die Informationen über Arbeitsvorgänge, die die Module 11-13 ausführen können, aus den Komponenten 21-23 auslesen und deren Ausgabe über die zweite Schnittstelle 9 veranlassen, wie bei 34 dargestellt. Sofern in der Datei 33 bereits Daten abgelegt sind, die einen oder mehrere Arbeitsabläufe repräsentieren, kann die Beschreibungseinheit 31 auch diese Daten über die zweite Schnittstelle 9 ausgeben. Auf diese Weise kann die eingebettete Recheneinrichtung 5 selbst eine Beschreibung der in der Vorrichtung 2 zur Verfügung stehenden Arbeitsvorgänge und der bereits implementierten Arbeitsabläufe liefern.

Der Funktionsblock 32 ist in der Recheneinrichtung 5 zur Ansteuerung der Module 11-13 vorgesehen und wird nachfolgend als Ansteuereinheit bezeichnet. Daten 35, die den Ablaufplan eines Arbeitsablaufes in einer Beschreibungssprache repräsentieren, werden von der Ansteuereinheit 32 interpretiert. Für jeden Arbeitsvorgang eines Arbeitsablaufes, der bei Abarbeitung des Arbeitsablaufes durchzuführen ist, kann die Ansteuereinheit 32 den entsprechenden Arbeitsvorgang, ggf. ergänzt um einen Parameterwert oder mehrere Parameterwerte für einen oder mehrere Eingangsparameter, an eine der Komponenten 21-23 des maschinenlesbaren Codes übergeben. Dabei wird der entsprechende Arbeitsvorgang an diejenige Komponente 21-23 übergeben, die dem steuerbaren Modul der Module 11-13 zugeordnet ist, von dem der entsprechende Arbeitsvorgang ausführbar ist. Die Komponente 21-23 besitzt die Kenntnis über die Ansteuerung des entsprechenden Moduls. Dazu kann die Steuerinformation für einen Arbeitsvorgang beispielsweise als ausführbarer Code in der entsprechenden Komponente 21-23 enthalten sein. Unter Zugriff auf die Steuerinformationen, die für die Arbeitsvorgänge des Arbeitsablaufes in den Komponenten 21-23 vorgesehen sind, werden so Steuerbefehle 36 erzeugt und über die erste Schnittstelle 8 ausgegeben. Die Daten 35 können auch in der Datei 33 gespeichert werden, in der ein oder mehrere Arbeitsabläufe, beispielsweise unter Verwendung einer Beschreibungssprache, gespeichert sind. Zur Ausführung des Arbeitsablaufes kann die Ansteuereinheit 32 auch die in der Recheneinrichtung gespeicherten Arbeitsabläufe aufrufen und abhängig von den von ihnen umfassten Arbeitsvorgängen die Umsetzung von Steuerinformationen aus den Komponenten 21-23 zu veranlassen, um die Steuerbefehle 36 zu erzeugen.

Von den Modulen 11-13 ausführbare Arbeitsvorgänge sind in Fig. 2 schematisch als Blöcke 24-28 dargestellt.

Fig. 3 zeigt eine schematische Darstellung der Komponenten 21-23 des in einem Speicher der Recheneinrichtung 5 gespeicherten maschinenlesbaren Codes nach einem Ausführungsbeispiel. Die Komponente 21 enthält Informationen, in denen das erste Modul 11 und dessen Arbeitsvorgänge 24 und 25 abgebildet sind. Wie schematisch bei 44 und 45 dargestellt ist, enthält die Komponente 21 wenigstens Informationen 44 darüber, ob und ggf. wie viele Ein- und Ausgangsparameter mit dem Arbeitsvorgang 24 verknüpft sind und welcher Steuerbefehl an das Modul 11 ausgegeben werden muss, um die Abarbeitung des Arbeitsvorgangs 24 zu veranlassen, und Informationen 45 darüber, ob und ggf. wie viele Ein- und Ausgangsparameter mit dem Arbeitsvorgang 25 verknüpft sind und welcher Steuerbefehl an das Modul 11 ausgegeben werden muss, um die Abarbeitung des Arbeitsvorgangs 25 zu veranlassen. In den Informationen 44 und 45 kann weiterhin das Verhalten des Moduls 11 bei der Abarbeitung der Arbeitsvorgänge 24 bzw. 25 beschrieben sein. Diese Informationen über verfügbare Arbeitsvorgänge sowie Ein- und Ausgangsparameter und ggf. die Informationen über das Verhalten des Moduls 11 können in einer Beschreibungssprache, beispielsweise XML, hinterlegt sein.

Zusätzlich zu diesen Informationen, die zur Ansteuerung des Moduls 11 bzw. zur Simulation von von dem Modul 11 ausgeführten Arbeitsvorgängen eines Arbeitsablaufes verwendet werden, enthält die erste Komponente 21 Namen oder andere deskriptive Beschreibungen der Arbeitsvorgänge 24 und 25, die schematisch bei 41 dargestellt sind. Auch diese Informationen über die Arbeitsvorgänge 24 und 25 können in einer Beschreibungssprache, beispielsweise XML, hinterlegt sein.

Ähnlich weist die zweite Komponente 22 Informationen 46 über die Ansteuerung sowie Ein- und Ausgangsparameter für den Arbeitsvorgang 26 sowie einen Namen oder eine andere deskriptive Beschreibung 42 des Arbeitsvorgangs 26 auf. Die dritte Komponente 23 weist Informationen 47 bzw. 48 über die Ansteuerung sowie Ein- und Ausgangsparameter für den Arbeitsvorgang 27 bzw. 28 sowie Namen oder andere deskriptive Beschreibungen 43 der Arbeitsvorgänge 27 und 28 auf.

Der Speicher 7 der eingebetteten Recheneinrichtung 5 kann somit einen maschinenlesbaren Code mit verschiedenen separaten Komponenten aufweisen, von denen jede genau einem der Module 11-13 der Vorrichtung 2 zugeordnet ist. Das entsprechende Modul wird durch die Informationen in der ihm zugeordneten Komponente abstrakt beschrieben. Die Arbeitsvorgänge 24-28 der Module können in der Information, die in der Komponente 21-23, die dem jeweiligen Modul zugeordnet ist, so abgebildet sein, dass eine Simulation des Verhaltens des entsprechenden Moduls bei Ausführung eines Arbeitsvorgangs möglich ist. Die Komponenten 21-23 des maschinenlesbaren Codes können somit Komponenten der Firmware der eingebetteten Recheneinrichtung 5 sein, die jeweils ein steuerbares Modul modellieren. Sie stellen eine abstrakte Beschreibungen der Module bereit.

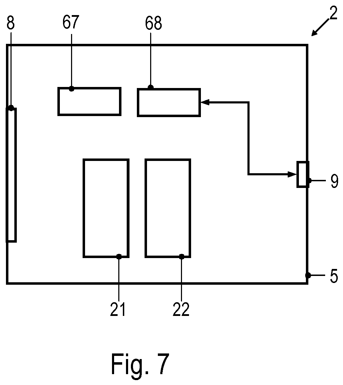

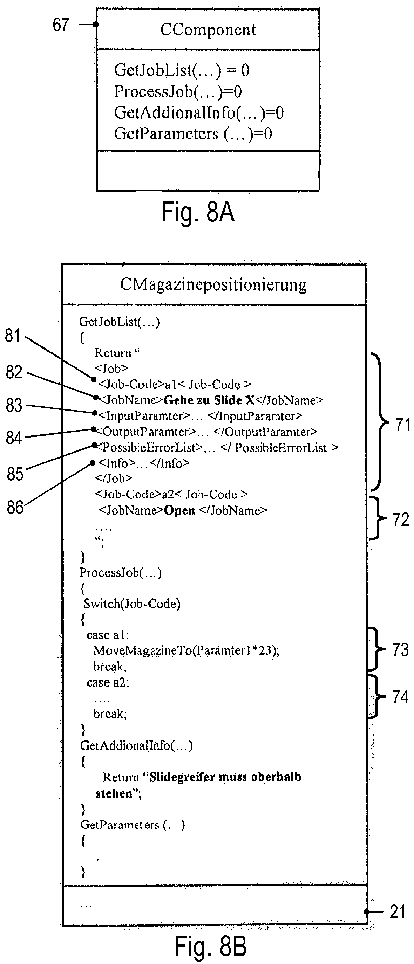

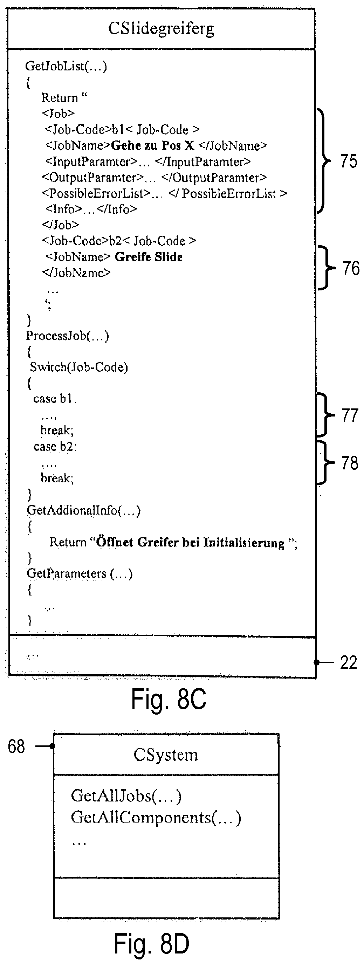

Die Komponenten 21-23 des maschinenlesbaren Codes können in jedem geeigneten Format ausgebildet sein, das ein Lesen der Informationen durch die Beschreibungseinheit 31 und die Übergabe von Arbeitsvorgängen durch die Ansteuereinheit 32 der eingebetteten Recheneinrichtung 5 erlaubt. Eine Ausgestaltung nach einem Ausführungsbeispiel wird unter Bezugnahme auf Fig. 7 und 8 näher beschrieben.

Fig. 4 ist eine Flussdiagrammdarstellung eines Verfahrens 51 nach einem Ausführungsbeispiel. Das Verfahren kann mit den unter Bezugnahem auf Fig. 1-3 beschriebenen Vorrichtungen 2 durchgeführt werden.

Bei 52 werden von einer in ein optisches System eingebetteten Recheneinrichtungen Informationen über Arbeitsvorgänge ausgegeben, die von einem oder mehreren Modulen des optischen System ausgeführt werden können. Das Ausgeben der Informationen über die Arbeitsvorgänge kann das Ausgeben von Namen und deskriptiven Beschreibungen der Arbeitsvorgänge umfassen. Das Ausgeben der Informationen kann weiterhin das Ausgeben von Informationen darüber, ob und ggf. wie viele Ein- und Ausgangsparameter den Arbeitsvorgängen jeweils zugeordnet sind, umfassen. Das Ausgeben der Informationen kann weiterhin das Ausgeben von Informationen über Randbedingungen der Arbeitsvorgänge umfassen. Die Informationen können in einer Beschreibungssprache, beispielsweise in XML, ausgegeben werden.

Bei 53 werden von der eingebetteten Recheneinrichtung Daten empfangen, die einen Arbeitsablauf repräsentieren. Die empfangenen Daten beschreiben den Arbeitsablauf durch eine Mehrzahl von Arbeitsvorgängen und Verknüpfungen zwischen den Arbeitsvorgängen. Die Verknüpfungen zwischen den Arbeitsvorgängen können Bedingungen dafür enthalten, wann die Ausführung eines Arbeitsvorgangs gestartet werden soll. Die Verknüpfungen zwischen den Arbeitsvorgängen können weiterhin definieren, ob Ausgangsparameter eines Arbeitsvorgangs als Eingangsparameter eines weiteren Arbeitsvorgangs verwendet werden. Die empfangenen Daten repräsentieren einen Ablaufplan des Arbeitsablaufes.

Bei 54 kann optional der Arbeitsablauf überprüft und/oder seine Ausführung simuliert werden. Um den Arbeitsablauf zu überprüfen, kann die in das optische System eingebettete Recheneinrichtung überprüfen, ob der Arbeitsablauf einen Arbeitsvorgang umfasst, der von dem Modul bzw. den Modulen nicht ausgeführt werden kann. Falls der Arbeitsablauf einen Arbeitsvorgang umfasst, der von dem Modul bzw. den Modulen nicht ausgeführt werden kann, kann eine entsprechende Fehlermeldung generiert werden. Die Überprüfung kann basierend auf den Informationen über die verfügbaren Arbeitsvorgänge erfolgen, die die eingebettete Recheneinrichtung beispielsweise aus persistenten Speichern der steuerbaren Module abruft. Die Fehlermeldung kann derart erzeugt werden, dass sie die Ursache der Fehlermeldung beschreibt. Dazu kann beispielsweise über die mit einem Host-Rechner zu koppelnde Schnittstelle der Recheneinrichtung ein Indikator für den in dem Arbeitsablauf enthaltenen Arbeitsvorgang bzw. die Arbeitsvorgänge ausgegeben werden, die nicht ausführbar sind. Alternativ oder zusätzlich kann die Überprüfung auch eine Überprüfung beinhalten, ob für jeden Arbeitsvorgang des Arbeitsablaufes festgelegt ist, woher dieser seine erforderlichen Eingangsparameter bezieht, und/oder ob die Randbedingungen für jeden Arbeitsvorgang eingehalten sind. Falls bei der Überprüfung ein Fehler erkannt wird, kann wiederum eine entsprechende Fehlermeldung generiert werden.

Um bei 54 die Ausführung des Arbeitsablaufes zu simulieren, kann die Recheneinrichtung Informationen über das Verhalten des Moduls bzw. der Module bei Ausführung der Arbeitsvorgänge heranziehen, die in einem Speicher der Recheneinrichtung gespeichert sein können. Falls bei der Simulation des Arbeitsablaufes ermittelt wird, dass der Arbeitsablauf, beispielsweise aufgrund des zeitlichen Verhaltens der Module, nicht durchgeführt werden kann, kann eine entsprechende Fehlermeldung generiert werden.

Bei 55 wird der Arbeitsablauf abhängig von den empfangenen Daten abgearbeitet. Dazu wird zur Ausführung der einzelnen Arbeitsvorgänge jeweils eine Steuerinformation für den entsprechenden Arbeitsvorgang umgesetzt, um abhängig davon einen Steuerbefehl zu erzeugen. Der Arbeitsablauf kann von der in das optische System eingebetteten Recheneinrichtung auf verschiedene Weise, beispielsweise vorwärtsgerichtet oder rückwärtsgerichtet abgearbeitet werden. Dabei kann der Arbeitsablauf auch eine komplexere Form aufweisen, bei der beispielsweise mehrere Arbeitsvorgänge wenigstens teilweise gleichzeitig abgearbeitet werden.

Die Abarbeitung des Arbeitsablaufes bei 55 kann erfordern, dass ein oder mehrere Parameterwerte angegeben werden, um die Ausführung des Arbeitsablaufes zu erlauben. Beispielsweise erfordert das Laden einer Slide in einem Slide-Scanner typischerweise eine Angabe der Position derjenigen Slide, die geladen werden soll, als Parameter. Die Parameterwerte können auf verschiedene Weise erhalten werden. Bei einer Ausgestaltung können die Parameterwerte an die in das optische System eingebettete Recheneinrichtung zusammen mit den Daten bei 53 übertragen werden. Bei einer weiteren Ausgestaltung können die Parameterwerte an dem optischen System selbst, beispielsweise über die Benutzerschnittstelle 4, festgelegt werden. Für Arbeitsvorgänge, die Teil der Arbeitsablaufes sind, können Eingangsparameter auch durch Ausgangsparameter anderer Arbeitsvorgänge definiert werden, so dass eine Parameterübergabe zwischen den Arbeitsvorgängen stattfindet.

Die Vorrichtungen und Verfahren nach verschiedenen Ausführungsbeispielen erleichtern die Entwicklung und das Austesten von neuen Arbeitsabläufen, die mit den steuerbaren Modulen eines optischen System ausgeführt werden können. Eine derartige Entwicklung von Arbeitsabläufen kann von einem Benutzer des optischen Systems bei Bedarf durchgeführt werden. Alternativ oder zusätzlich kann eine derartige Entwicklung von Arbeitsabläufen auch bei der Fertigung des optischen Systems erfolgen, wobei die entwickelten Arbeitsabläufe in einem Speicher der in das optische System eingebetteten Recheneinrichtung hinterlegt und im Nutzbetrieb des optischen Systems bei Bedarf aufgerufen werden können.

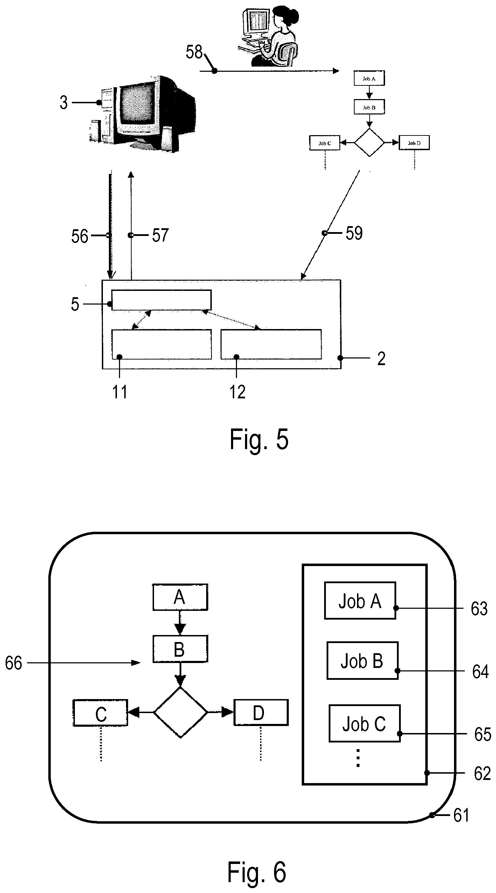

Fig. 5 illustriert ein Anwendungsszenario einer Vorrichtung nach einem Ausführungsbeispiel, bei dem Arbeitsabläufe neu entwickelt oder bestehende Arbeitsabläufe modifiziert werden. Dabei ist eine in ein optisches System eingebettete Vorrichtung 2 mit mehreren steuerbaren Modulen 11, 12 und einer Recheneinrichtung 5 dargestellt, die die steuerbaren Module 11, 12 ansteuert. Ein Host-Rechner 3 ist mit der Vorrichtung 2 gekoppelt. Die Vorrichtung 2 kann nach einem der unter Bezugnahme auf die anderen Figuren beschriebenen Ausführungsbeispiele ausgestaltet sein.

Bei 55 fordert der Host-Rechner 3 eine Beschreibung der in das optische System eingebetteten Vorrichtung 2 an.

Bei 56 gibt die Vorrichtung 2 eine Antwort auf die Anfrage 55 aus. Die Antwort beinhaltet Informationen über Arbeitsvorgängen, die von den steuerbaren Modulen 11, 12 ausführbar sind. Die Information über die Arbeitsvorgänge kann in einer Beschreibungssprache ausgegeben werden, deren Semantik sowohl die eingebettete Recheneinrichtung 5 als auch der Host-Rechner 3 kennt. Die Information über die Arbeitsvorgänge kann die Fähigkeiten, d.h. die ausführbaren Arbeitsvorgänge, und die Eigenschaften der Module 11, 12 so beschreiben, dass ein Entwickler auf der Basis dieser Informationen einen Ablaufplan eines Arbeitsablaufes erstellen kann, selbst wenn er vorab keine Kenntnisse über die Module 11, 12 und die von diesen ausführbaren Arbeitsvorgänge hat. Die Informationen über die Arbeitsvorgänge können Verhaltensmuster, Reaktionszeiten, Bedingungen für die Ausführung eines Arbeitsvorgangs und/oder Folgezustände umfassen.

Falls in der Vorrichtung 5 bereits ein Arbeitsablauf oder mehrere Arbeitsabläufe gespeichert ist bzw. sind, können mit der Antwort bei 56 auch Informationen über diese bereits in der Vorrichtung 5 implementierten Arbeitsabläufe an den Host-Rechner 3 übertragen werden. Die Informationen über die Arbeitsabläufe können dabei ebenfalls in einer Beschreibungssprache übergeben werden, die den Arbeitsablauf im Hinblick auf die von ihm umfassten Arbeitsvorgänge und Verknüpfungen zwischen den Arbeitsvorgängen charakterisiert.

Bei 57 können basierend auf den in der Antwort 56 enthaltenen Informationen neue Arbeitsabläufe entwickelt oder bestehende Arbeitsabläufe abgewandelt werden. Dies kann rechnergestützt auf dem Host-Rechner 3 erfolgen. Der Host-Rechner 3 kann insbesondere einen Editor aufweisen, der die Beschreibungssprache, in der ein Arbeitsablauf repräsentiert wird, beispielsweise als Ablaufplan für einen Entwickler oder Benutzer zugänglich macht. So werden die Arbeitsabläufe auch für Benutzer oder Entwickler nachvollziehbar, die keine detaillierten Kenntnisse über die spezifische Hardware-Implementierung der Vorrichtung 2 haben. Die Änderung, Begutachtung und Validierung der Arbeitsabläufe wird erleichtert.

Bei 58 wird der Arbeitsablauf wieder an die in das optische System eingebettete Recheneinrichtung 5 übergeben. Dabei wird der Arbeitsablauf durch die von ihm umfassten Arbeitsvorgänge und Verknüpfungen zwischen den Arbeitsvorgängen beschrieben. Die Firmware der Recheneinrichtung 5 kann den Arbeitsablauf dann überprüfen, simulieren und/oder ausführen, wie unter Bezugnahme auf Fig. 1-4 erläutert wurde.

Bei einem Verfahren nach einem Ausführungsbeispiel kann der bei 57 erstellte Arbeitsablauf auf dem Host-Rechner 3 simuliert werden, bevor er bei 58 an die in das optische System eingebettete Recheneinrichtung 5 übergeben wird. Um den Arbeitsablauf auf dem Host-Rechner 3 zu simulieren, können die mit der Antwort bei 56 übertragenen Informationen auch das Verhalten der Module 11, 12 bei der Ausführung der Arbeitsvorgänge beschreiben. Alternativ kann anstelle einer vollständigen Simulation auf dem Host-Rechner 3 eine Überprüfung erfolgen, ob die bekannten Randbedingungen und die erforderlichen Verknüpfungen für Ein- und Ausgangsparameter eingehalten sind.

Der Host-Rechner 3 und die in das optische System eingebettete Recheneinrichtung 5 können dieselbe Sprache zur Beschreibung der Module, insbesondere der von ihnen ausführbaren Arbeitsvorgänge und deren Attribute (z.B. Ein- und Ausgangsparameter) und Randbedingungen, und zur Beschreibung von Arbeitsabläufen verwenden. Dies erlaubt es, dass an dem Host-Rechner 3 unabhängig von dem spezifischen optischen System und unabhängig von den Modulen der Vorrichtung automatisch auszuführende Arbeitsabläufe beschrieben und beispielsweise grafisch dargestellt werden können. Die Beschreibung und Zusammenstellung von Arbeitsabläufen durch einen Entwickler an dem Host-Rechner 3 kann abhängig von den Informationen erfolgen, die von der eingebetteten Recheneinrichtung 5 mit der Antwort 56 bereitgestellt werden. Die Bearbeitung und grafische Darstellung der Arbeitsabläufe an dem Host-Rechner 3 ist somit selbst dann möglich, wenn der Host-Rechner 3 vorab keine Kenntnisse über die in das optische System eingebettete Vorrichtung 5 hatte.

Da die bei 56 von der eingebetteten Recheneinrichtung 5 ausgegebenen Informationen eine deskriptive Beschreibung der Arbeitsabläufe beinhalten können, erfordert die Zusammenstellung von neuen Arbeitsabläufen oder die Abwandlung bereits implementierter Arbeitsabläufe bei 57 keine speziellen Programmierkenntnisse, sondern kann über eine Benutzerschnittstelle basierend auf den gewünschten Eigenschaften eines Prozesses vorgenommen werden, der von den Modulen 11, 12 ausgeführt werden soll. Die Arbeitsziele, die mit der Ausführung des Arbeitsablaufes erzielt werden sollen, sind dem Entwickler bekannt, und der Entwickler wird abhängig von den Arbeitszielen und den ihm bereitgestellten Informationen über zur Verfügung stehende Arbeitsvorgänge den Arbeitsablauf entwerfen.

Da die bei 58 an die eingebettete Recheneinrichtung 5 übergebenen Daten eine deskriptive Beschreibung des Arbeitsablaufes beinhalten können, ist es nicht erforderlich, den Arbeitsablauf als vollständig kompilierten Befehlscode in der eingebetteten Recheneinrichtung 5 zu hinterlegen. Die eingebettete Recheneinrichtung 5 veranlasst die Abarbeitung des Arbeitsablaufes unter Heranziehung von in der Recheneinrichtung 5 gespeicherten Steuerinformationen, die den jeweiligen Arbeitsvorgängen zugeordnet sind.

Die Vorrichtungen und Verfahren nach verschiedenen Ausführungsbeispielen erlauben eine Trennung der Informationen, die der Host-Rechner 3 und die eingebettete Recheneinrichtung 5 besitzen müssen. Insbesondere liegt das Wissen darüber, welche Arbeitsvorgänge von der eingebetteten Vorrichtung 2 ausführbar sind, grundsätzlich bei der eingebetteten Recheneinrichtung 5. Bei Bedarf fragt der Host-Rechner 3 diese Informationen von der eingebetteten Recheneinrichtung 5 ab. Der Host-Rechner 3 muss vorab keine Kenntnisse darüber besitzen, welche Arbeitsvorgänge mit der eingebetteten Vorrichtung 5 ausführbar sind. Die eingebettete Recheneinrichtung 5 führt eine Informationshaltung für die verfügbaren Arbeitsvorgänge aus und veranlasst die Abarbeitung von Arbeitsabläufen auf der Basis von Arbeitsvorgängen. Die Steuerinformation, die die für die Abarbeitung eines einzelnen Arbeitsvorgangs erforderliche Information repräsentiert, kann grundsätzlich in einem persistenten Speicher des entsprechenden Moduls gespeichert und aus diesem von der eingebetteten Recheneinrichtung 5 abgefragt werden. Bei einem Ausführungsbeispiel kann beispielsweise bei einem Systemstart des optischen Systems die eingebettete Recheneinrichtung 5 die Informationen über die Arbeitsvorgänge und die diesen zugeordneten Steuerinformationen von persistenten Speichern der steuerbaren Module abfragen.

Während sowohl die eingebettete Recheneinrichtung 5 als auch der Host-Rechner 3 über eine gemeinsame Sprache zur Beschreibung von Arbeitsvorgängen und deren Attributen (Ein- und Ausgangsparameter) und Randbedingungen sowie über eine gemeinsame Sprache zur Beschreibung von Arbeitsabläufen verfügen, kann zunächst nur die eingebettete Recheneinrichtung 5 Kenntnisse über die Module, die von diesen ausführbaren Arbeitsvorgänge, die an die Module auszugebenden Steuerbefehle und deren Semantik, die Attribute, Randbedingungen und das Verhalten der Module bei Ausführung der Arbeitsvorgänge haben. Diese Informationen können dem Host-Rechner 3 zur Verfügung gestellt werden. Der Host-Rechner 3 ist wiederum eingerichtet, um diese Informationen einem Benutzer oder Entwickler zur Verfügung zu stellen. Auf diese Weise kann der Entwickler Kenntnisse über die Arbeitsvorgänge, deren Attribute und Randbedingungen, über die Semantik der an die Module auszugebenden Steuerbefehle und, falls bereits Arbeitsabläufe in der eingebetteten Recheneinrichtung 5 implementiert sind, über die Interaktion der Arbeitsvorgänge erhalten. Der Benutzer bzw. Entwickler hat Kenntnisse über das Ziel, das mit einem Arbeitsablauf erreicht werden soll, und kann den Arbeitsablauf basierend auf den ihm von dem Host-Rechner bereitgestellten Informationen entwickeln.

Durch eine derartige Trennung des Informationsmanagements, bei der die eingebettete Vorrichtung 2 selbst eine Beschreibung ihrer Fähigkeiten liefern kann, kann die Entwicklung von Arbeitsabläufen, die Anpassung von Arbeitsabläufen an neue Konfigurationen sowie die Wartung und Fehleranalyse vereinfacht werden.

Fig. 6 ist eine schematische Darstellung einer grafischen Benutzeroberfläche 61, wie sie bei dem Host-Rechner 3 von Fig. 1 oder 5 dargestellt werden kann.

Die grafischen Benutzeroberfläche stellt Informationen über Arbeitsvorgänge 62-65 (in Fig. 6 als "Job A", "Job B" und "Job C" bezeichnet) bereit. Die Informationen 62 können nicht nur die Namen der verschiedenen Arbeitsvorgänge, sondern auch deren Attribute, Randbedingungen etc. angeben. Mehrere Arbeitsvorgänge können benutzerdefiniert zu einem Arbeitsablauf zusammengestellt werden, der grafisch als Ablaufplan 66 angezeigt werden kann. Der Host-Rechner kann so eingerichtet sein, dass der Entwickler oder Benutzer den Ablaufplan 66 verändern kann. Wenn der Entwickler oder Benutzer die Erstellung des Ablaufplanes 66 beendet hat, kann der Host-Rechner diesen in Daten umsetzen, die den Arbeitsablauf repräsentieren und die an die in das optische System eingebettete Recheneinrichtung 5 übertragen werden.

Unter Bezugnahme auf Fig. 7 und 8 wird eine mögliche Ausführung der Speicherung von Informationen über die Arbeitsvorgänge in den Vorrichtungen und Verfahren, die unter Bezugnahme auf Fig. 1-5 beschrieben wurden, näher beschrieben. Zur Veranschaulichung wird dabei auf eine in einen Slide-Scanner eingebettete Vorrichtung Bezug genommen, die als steuerbare Module eine Einrichtung zur Magazinpositionierung und eine Slide-Greifer-Einrichtung aufweist. Die unter Bezugnahme auf Fig. 7 und 8 beschriebene Ausführung der Speicherung kann auch bei Vorrichtungen und Verfahren eingesetzt werden, bei denen die steuerbaren Module andere sind, andere Arbeitsvorgänge ausführen können und/oder in ein anderes optisches System eingebettet sind.

Fig. 7 ist eine schematische Darstellung der in das optische System eingebetteten Recheneinrichtung 5, wobei Komponenten 21 und 22 eines maschinenlesbaren Codes Informationen über das erste Modul (z.B. eine Einrichtung zur Magazinpositionierung) und das zweite Modul (z.B. eine Slide-Greifer-Einrichtung) beinhalten. Die in den Komponenten 21 und 22 hinterlegten Informationen weisen eine Struktur auf, die durch eine generische Klassendefinition 67 festgelegt ist. Die Klassendefinition 67 kann als Schnittstelle zur Ansteuerung der steuerbaren Module dienen, da durch sie festlegt ist, in welcher Form in den Komponenten 21 und 22 des maschinenlesbaren Codes die Informationen über die steuerbaren Module hinterlegt sind. Durch die Klassendefinition 67 wird das Management für die Informationen in den Komponenten 21 und 22 des maschinenlesbaren Codes festgelegt. Die deskriptive Beschreibung der Arbeitsvorgänge in den Komponenten 21 und 22 des maschinenlesbaren Codes kann über eine Beschreibungssprache, beispielsweise über XML, erfolgen. Die Informationen können beispielsweise für jeden der Arbeitsvorgänge einen Namen, eine deskriptive Beschreibung, Eingangs- und/oder Ausgangsparameter, mögliche Fehler, Randbedingungen und eine dem Arbeitsvorgang zugeordnete ID beinhalten. Eine Systemklasse 68 kann die Informationen für alle Arbeitsvorgänge abfragen und über die zweite Schnittstelle ausgeben. Die Systemklasse 68 erfüllt somit die Funktion der unter Bezugnahme auf Fig. 2 beschriebenen Beschreibungseinheit 31, die eine Beschreibung der von den Modulen der eingebetteten Vorrichtung ausführbaren Arbeitsvorgänge liefern kann.

Fig. 8A ist eine schematische Darstellung einer Klassendefinition 67. Diese definiert bei der dargestellten Ausführung eine Methode "GetJobList", mit der die von einem Modul ausführbaren Arbeitsvorgänge einschließlich derer Attribute abgefragt werden können, eine Methode "ProcessJob", mit der ein Arbeitsvorgang an eine der Komponenten 21, 22 des maschinenlesbaren Codes übergeben werden kann zur Umsetzung einer Steuerinformation, die dem entsprechenden Arbeitsvorgang zugeordnet ist, eine Methode "GetAdditionallnfo", mit der für das Modul hinterlegte weitere Informationen abgefragt werden können, und eine Methode "GetParameters", mit der für das Modul hinterlegte Parameter abgefragt werden können.

Fig. 8B und 8C sind schematische Darstellungen der in den Komponenten 21 und 22 hinterlegten Informationen. Dabei ist beispielhaft eine Beschreibung der entsprechenden Module in XML dargestellt. Zur Veranschaulichung werden diese Komponenten beispielhaft für den Fall dargestellt, dass die in der ersten Komponente 21 abgebildete Einrichtung zur Magazinpositionierung die Arbeitsvorgänge "Gehe zu Slide X", mit dem eine Verschiebung zur Slide an der Position X möglich ist, "Öffnen", mit dem ein Öffnen einer Halterung möglich ist, und "Schließen", mit dem ein Schlie-βen der Halterung möglich ist, aufweist. Als Randbedingung kann die Einrichtung zur Magazinpositionierung aufweisen, dass der Slide-Greifer bei Ausführung eines Arbeitsvorgangs oberhalb stehen muss. Parameter, die die Arbeitsweise der Einrichtung zur Magazinpositionierung beschreiben, können beispielsweise eine Time-out-Zeit für die Initialisierung und die für die Verschiebung um eine Slide benötigte Zeit sein. Die zweite Komponente 22 ist beispielhaft für den Fall dargestellt, dass die in der zweiten Komponente 22 abgebildete Slide-Greifer-Einrichtung die Arbeitsvorgänge "Gehe zu Position X", mit dem der Slide-Greifer zur Position X bewegt werden kann, "Greife Slide", mit dem ein Ergreifen einer Slide möglich ist, und "Slide Loslassen", mit dem ein Loslassen der Slide möglich ist, aufweist. Als Randbedingung kann die Slide-Greifer-Einrichtung aufweisen, dass der Slide-Greifer bei Initialisierung öffnet. Parameter, die die Arbeitsweise der Slide-Greifer-Einrichtung beschreiben, können beispielsweise eine Time-out-Zeit für die Initialisierung und die für die Verschiebung um einen Millimeter benötigte Zeit sein.

Fig. 8B veranschaulicht eine Ausgestaltung der Beschreibung der Einrichtung zur Magazinpositionierung in der Komponente 21. Diese umfasst Informationen 71 über den Arbeitsvorgang "Gehe zu Slide X", Informationen 72 über den Arbeitsvorgang "Öffnen" und (nicht dargestellte) Informationen über den Arbeitsvorgang "Schließen". Die Informationen 71 über den Arbeitsvorgang "Gehe zu Slide X" umfassen einen Code bzw. eine ID 81 für diesen Arbeitsvorgang, einen deskriptiven Namen 82, Eingangsparameter 83, Ausgangsparameter 84, eine Liste möglicher Fehler 85 und weitere Informationen 86. Diese Informationen können für jeden der Arbeitsvorgänge vorhanden sein. Die Komponente 21 weist weiterhin Steuerinformationen 73 auf, die bestimmen, wie ein Steuerbefehl für die Einrichtung zur Magazinpositionierung generiert wird, um den Arbeitsvorgang "Gehe zu Slide X" durchzuführen. Die Steuerinformationen 73 können ausführbarer Code, beispielsweise Assembler-Code, sein. Gemäß der Steuerinformation 73 wird zur Durchführung des Arbeitsvorgangs "Gehe zu Slide X", der mit einem Parameterwert ausgefüllt ist, gemäß der schematisch dargestellten Information "MoveMagazineTo" ein Steuerbefehl generiert. Die Komponente 21 des maschinenlesbaren Codes, die der Einrichtung zur Magazinpositionierung zugeordnet ist, beinhaltet weiterhin Steuerinformationen 74 für die weiteren Arbeitsvorgänge, die von der Einrichtung zur Magazinpositionierung ausführbar sind. In der Beschreibung der Einrichtung zur Magazinpositionierung sind auch die Randbedingungen als zusätzliche Information sowie die Parameter, die das Verhalten der Einrichtung zur Magazinpositionierung bei Ausführung der Arbeitsvorgänge beschreiben, hinterlegt.

Fig. 8C veranschaulicht eine Ausgestaltung der Beschreibung der Slide-Greifer-Einrichtung in der Komponente 22 des maschinenlesbaren Codes. Diese beinhaltet Informationen 75, 76 über die ausführbaren Arbeitsvorgänge, Steuerinformationen 77, 78, auf deren Basis die Steuerbefehle für die Slide-Greifer-Einrichtung erzeugt werden können, die Randbedingungen der Slide-Greifer-Einrichtung als zusätzliche Information sowie die Parameter, die das Verhalten der Slide-Greifer-Einrichtung bei Ausführung der Arbeitsvorgänge beschreiben. Die Informationen 75, 76 weisen im Wesentlichen die Struktur auf, die für die Informationen 71 beschrieben wurde.

Fig. 8D ist eine schematische Darstellung der Systemklasse 68. Diese definiert die Methode "GetAllJobs", mit der Informationen über alle von den Modulen ausführbaren Arbeitsvorgänge von den Komponenten 21 und 22 des maschinenlesbaren Codes abgefragt werden können, und eine Methode "GetAllComponents", mit der Informationen über die mit der eingebetteten Recheneinrichtung 5 gekoppelten Module abgefragt werden können.

Mit den in der Systemklasse 68 definierten Methoden kann die eingebettete Recheneinrichtung 5 die Informationen 71, 72, 75 und 76 über die von den verschiedenen Modulen ausführbaren Arbeitsvorgänge abfragen und über die zweite Schnittstelle 9 ausgeben.

Ein Arbeitsablauf, der mehrere Arbeitsvorgänge umfasst, wird an die eingebettete Recheneinrichtung 5 übertragen. Dabei können die einzelnen Arbeitsvorgänge bereits mit Parametern ausgefüllt sein, oder die den Arbeitsablauf repräsentierenden Daten können Informationen dazu enthalten, woher ein Arbeitsvorgang seine Parameter bezieht (z.B. von einem anderen Arbeitsvorgang), was der an ihn anschlie-ßende Arbeitsvorgang ist (bei einer vorwärtsgerichteten Abarbeitung des Arbeitsablaufes), oder welche Bedingung erfüllt sein muss, damit die Ausführung des Arbeitsvorgangs begonnen wird (bei einer rückwärtsgerichteten Abarbeitung des Arbeitsablaufes). Auch der Arbeitsablauf kann beispielsweise in XML beschrieben sein.

Der Ablaufplan kann dann von der eingebetteten Recheneinrichtung 5 abgearbeitet werden, beispielsweise mit der unter Bezugnahme auf Fig. 2 beschriebenen Ansteuereinheit 32. Dazu werden die Arbeitsvorgänge mit der Methode "ProcessJob" und den jeweiligen Parameterwerten so übergeben, dass eine Umsetzung der entsprechende Steuerinformation in einen Steuerbefehl erfolgt. Die Art und Weise, wie der Steuerbefehl erzeugt wird, wird somit durch die Information in der Komponenten des maschinenlesbaren Codes, die dem jeweiligen Modul zugeordnet ist, bestimmt. Für den mit einem Parameterwert ausgefüllten Arbeitsvorgang "Gehe zu Slide X" bestimmt beispielsweise die Steuerinformation 71 den ausgegebenen Steuerbefehl. Der Arbeitsvorgang kann in einen entsprechenden Zustand (z.B. "Pending", "Ready", "Abort", "Error") versetzt werden, wobei abhängig von dem Zustand des Arbeitsvorgangs, seinen Eingangsparametern und Ausgangsparametern und evtl. Zeitbedingungen der Arbeitsablauf weiter abgearbeitet wird.

Bei Auftreten eines Fehlerfalls in einem der Arbeitsvorgänge kann die Durchführung des Arbeitsablaufes gestoppt werden. Dazu können alle Arbeitsvorgänge mit dem Zustand "Pending" beendet und alle Module gestoppt werden.

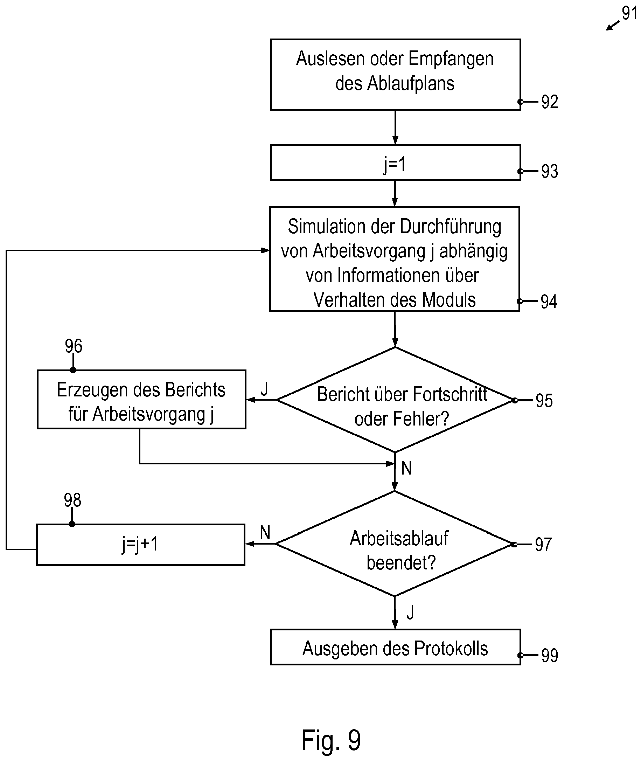

Wie bereits erwähnt wurde, kann bei den Vorrichtungen und Verfahren nach den unter Bezugnahme auf Fig. 1-8 beschriebenen Ausführungsformen die in das optische System eingebettete Recheneinrichtung 5 die Durchführung eines Arbeitsablaufes auch simulieren. Eine Prozedur zur Simulation eines Arbeitsablaufes, die von der in das optische System eingebetteten Recheneinrichtung ausgeführt werden kann, wird unter Bezugnahme auf Fig. 9 näher beschrieben.

Fig. 9 ist eine Flussdiagrammdarstellung einer Prozedur 91 zum Simulieren eines Arbeitsablaufes. Zur Veranschaulichung ist ein Fall dargestellt, bei dem ein Arbeitsablauf sequentiell durchzuführende Arbeitsvorgänge aufweist, wobei der Index j die Arbeitsvorgänge bezeichnet. Die Simulationsprozedur kann jedoch entsprechend auch für komplexere Arbeitsabläufe angewandt werden, in denen Arbeitsvorgänge parallel ausgeführt werden.

Bei 92 werden Daten, die einen Arbeitsablauf repräsentieren, von einem Host-Rechner empfangen oder aus einem Speicher der in das optische System eingebetteten Recheneinrichtung ausgelesen.

Bei 93 wird die Simulation initialisiert, indem der die Arbeitsvorgänge bezeichnende Index j auf 1 gesetzt wird.

Bei 94 wird die Durchführung des j-ten Arbeitsvorgangs simuliert. Dabei greift die in das optische System eingebetteten Recheneinrichtung auf in ihrem Speicher hinterlegte Informationen über das Verhalten des jeweiligen Moduls zu. Die Informationen können abhängig von Eingangsparametern des Arbeitsvorgangs ausgewertet werden. Bei der unter Bezugnahme auf Fig. 8 erläuterten beispielhaften Anwendung kann eine Ausführungszeit für einen Arbeitsvorgang beispielsweise abhängig von dem Parameter, der die für eine Bewegung pro Längeneinheit benötigte Zeit angibt, und dem übergebenen Parameterwert ausgewertet werden.

Bei 95 wird ermittelt, ob ein Bericht über einen Fortschritt der Simulation oder das Auftreten eines Fehlers ausgegeben werden muss. Die entsprechende Option kann beispielsweise durch einen Benutzer oder Entwickler eingestellt werden. Falls bei 95 ermittelt wird, dass ein Bericht über einen Fortschritt oder das Auftreten eines Fehlers ausgegeben werden muss, fährt die Prozedur bei 96 fort, wo der Bericht erzeugt wird. Dies kann beispielsweise durch das Schreiben eines Log-Files oder das Ausgeben einer entsprechenden Meldung über die zweite Schnittstelle 9 erfolgen.

Bei 97 wird überprüft, ob die Simulation der Arbeitsvorgänge des Arbeitsablaufes bereits beendet ist. Falls dies nicht der Fall ist, wird über Schritt 98 die Simulation des nächsten Arbeitsvorgangs durch Inkrementierung des Index j vorbereitet, und die Prozedur kehrt zu Schritt 94 zurück.

Falls bei 97 ermittelt wird, dass die Simulation aller Arbeitsvorgänge des Arbeitsablaufes durchgeführt oder die Simulation aus anderen Gründen beendet wird, wird bei 99 ein Protokoll über die Fehler oder das Fortschreiten der Simulation ausgegeben.

Das Berichten über den Fortschritt oder über mögliche Fehler in 96 kann auf verschiedene Weise erfolgen. Falls der Host-Rechner 3 mit der in das optische System eingebetteten Recheneinrichtung 5 gekoppelt ist, kann das Fortschreiten der Simulation und/oder können mögliche Fehler bereits während der Durchführung der Simulation des Arbeitsablaufes an den Host-Rechner 3 berichtet werden. In der grafischen Benutzeroberfläche des Host-Rechners 3, wie sie beispielhaft in Fig. 6 dargestellt ist, kann das Fortschreiten in dem Ablaufplan 66 oder anderweitig angezeigt werden. Beispielsweise kann der gerade aktive Arbeitsvorgang hervorgehoben dargestellt werden. Alternativ oder zusätzlich kann das zeitliche Verhalten in einem Sequenzdiagramm auf dem Host-Rechner 3 hinterlegt werden.

Da die Informationen, die in dem Speicher der in das optische System eingebetteten Recheneinrichtung 5 hinterlegt sind, das Verhalten der steuerbaren Module bei der Abarbeitung der Arbeitsvorgänge repräsentieren, kann sichergestellt werden, dass das simulierte Verhalten, das aufgrund der hinterlegten Beschreibung des Verhaltens der Module ermittelt wird, dem tatsächlichen Verhalten der Module bei der Ausführung eines Arbeitsvorgangs entspricht. Dies erleichtert eine entsprechende Fehlerbehandlung, beispielsweise wenn bei der Simulierung eines Arbeitsablaufes einer Einrichtung zur Magazinpositionierung und einer Slide-Greifer-Einrichtung ein Time-out bei der Abarbeitung eines Arbeitsvorgangs ermittelt wird. Anhand von in der hinterlegten Beschreibung der Module enthaltenen Informationen über Randbedingungen oder mögliche Fehler können auch andere Fehler erkannt werden, beispielsweise wenn sich der Greifer der Slide-Greifer-Einrichtung außerhalb einer erlaubten Position befindet. Basierend auf so erkannten Fehlern bei den einzelnen Arbeitsvorgängen können Rückschlüsse darauf gezogen werden, ob das Design des Arbeitsablaufes noch nicht optimal oder sogar fehlerhaft ist, oder ob Defekte in der Elektronik oder zu eng bemessene Parametrisierungen vorliegen.

Ein gutes Fehlermanagement kann dadurch erleichtert werden, dass bei den Vorrichtungen und Verfahren nach verschiedenen Ausführungsbeispielen in der in das optische System eingebetteten Recheneinrichtung auch Informationen über mögliche Fehler der einzelnen steuerbaren Module hinterlegt sein können. In Fig. 8B ist dies für die hinterlegte Beschreibung der Einrichtung zur Magazinpositionierung bei 85 dargestellt. Die Hinterlegung der möglichen Fehler erleichtert die Identifizierung von Fehlerquellen.

Eine Simulationsprozedur kann nicht nur bei der Entwicklung von Arbeitsabläufen verwendet werden, sondern das bei einer erfolgreichen Simulation erstellte Protokoll kann auch bei der tatsächlichen Ausführung des Arbeitsablaufes herangezogen werden, um zu überprüfen, ob die steuerbaren Module wie erwartet auf die an sie ausgegebenen Steuerbefehle reagieren. Falls sich ein steuerbares Modul unerwartet verhält, kann dies protokolliert von der eingebetteten Recheneinrichtung 5 und das entsprechende Protokoll an den Host-Rechner 3 übertragen werden.

Während unter Bezugnahme auf Fig. 9 die Simulation eines Arbeitsablaufes in der eingebetteten Recheneinrichtung 5 beschrieben wurde, kann alternativ oder zusätzlich die Simulation auch durch den Host-Rechner 3, ggf. in Kombination mit der eingebetteten Recheneinrichtung 5, durchgeführt werden. Dazu werden die Informationen, die das Verhalten der Module bei Ausführung der Arbeitsvorgänge beschreiben, mit an den Host-Rechner 3 übermittelt.

Während unter Bezugnahme auf Fig. 9 eine Prozedur beschrieben wurde, bei der Fehler während einer Simulation erkannt und berichtet werden, kann auch bei der tatsächlichen Ausführung des Arbeitsablaufes eine Überprüfung des Fortschritts stattfinden. Dazu kann die in das optische System eingebettete Recheneinrichtung 5 abhängig von den Informationen in der hinterlegten Beschreibung der Module, die deren Verhalten bei Ausführung eines Arbeitsablaufes charakterisieren, ein erwartetes Verhalten der Module ermitteln und mit dem tatsächlichen Verhalten der Module vergleichen. Bei Auftreten von Abweichungen kann der Fehler protokolliert und ggf. an den Host-Rechner 3 übertragen werden. Wiederum können Fehlerquellen einfach identifiziert werden, da zum einen ersichtlich ist, bei welchem Arbeitsvorgang der Fehler aufgetreten ist, zum anderen die in der eingebetteten Recheneinrichtung 5 hinterlegte Beschreibung der Module auch mögliche Fehler beschreiben kann.

Bei den Vorrichtungen und Verfahren nach den verschiedenen Ausführungsformen kann die in das optische System eingebetteten Recheneinrichtung 5 so ausgestaltet sein, dass eine Änderung in der Konfiguration des optischen Systems, bei der ein von der Recheneinrichtung gesteuertes Modul modifiziert oder entfernt oder ein neues steuerbares Modul hinzugefügt wird, eine entsprechende Anpassung der hinterlegten Beschreibung der Module vorgenommen wird. Wenn die Informationen über die zur Verfügung stehenden Arbeitsvorgänge für die einzelnen Module separat in einzelnen Komponenten eines maschinenlesbaren Codes enthalten sind, wie dies unter Bezugnahme auf Fig. 2, 3, 7 und 8 beschrieben wurde, kann eine Anpassung an eine modifizierte Konfiguration durch eine Anpassung der Beschreibung des entsprechenden Moduls in der jeweiligen Komponente des maschinenlesbaren Codes erfolgen. Falls ein Modul mit neuen Arbeitsvorgängen ausgestattet wird, kann die Beschreibung entsprechend ergänzt werden. Falls ein Modul entfernt wird, kann die entsprechende Beschreibung aus dem Speicher der eingebetteten Recheneinrichtung 5 entfernt werden. Falls ein neues Modul hinzugefügt wird, kann in dem Speicher der eingebetteten Recheneinrichtung 5 eine entsprechende Beschreibung hinterlegt werden. Es kann somit eine Anpassung an die modifizierte Konfiguration der eingebetteten Vorrichtung erfolgen, ohne dass die Beschreibungen der anderen Module geändert werden muss. Die Informationen über die verfügbaren Arbeitsvorgänge können beispielsweise dadurch aktuell gehalten werden, dass die Recheneinrichtung 5 bei jedem Start des optischen Systems Informationen über die verfügbaren Arbeitsvorgänge und diesen zugeordnete Steuerinformationen abfragt, die in persistenten Speichern der steuerbaren Module selbst hinterlegt sind. Vor der Durchführung eines Arbeitsablaufes können diese Informationen in einem Speicher, beispielsweise einem Arbeitsspeicher, der Recheneinrichtung 5 gespeichert werden.

Die Beschreibung des modifizierten steuerbaren Moduls kann auf verschiedene Weise an die eingebettete Recheneinrichtung 5 übertragen werden. Bei einer Ausführungsform wird die Beschreibung des geänderten Moduls von dem Host-Rechner 3 bereitgestellt. Bei einer weiteren Ausführungsform enthält das modifizierte steuerbare Modul einen Speicher, beispielsweise einen Flash-Speicher, in dem die Beschreibung hinterlegt ist. Die in das optische System eingebettete Recheneinrichtung kann dann eingerichtet sein, um die Beschreibung über die erste Schnittstelle 8 einzulesen.

Die Software zur Erstellung von Ablaufplänen auf dem Host-Rechner 3 muss bei der Modifizierung des wenigstens einen steuerbaren Moduls ebenfalls nicht angepasst werden, da die in das optische System eingebettete Vorrichtung 2 auf eine entsprechende Anfrage des Host-Rechners 3 hin eine Beschreibung der eingebetteten Vorrichtung 2 liefert, die die modifizierte Konfiguration, insbesondere die neu zur Verfügung stehenden Arbeitsvorgänge, wiederspiegelt. Nach der Modifizierung des wenigstens einen steuerbaren Moduls ist es möglich, neue Arbeitsabläufe zu erstellen, die der neuen Konfiguration Rechnung tragen, und an die eingebettete Recheneinrichtung zu übertragen. Arbeitsabläufe, die keine Arbeitsvorgänge des modifizierten Moduls beinhalten, müssten dabei nicht notwendig angepasst werden.

Falls eine Modifizierung des wenigstens einen Moduls nur die spezifische Ansteuerung eines Moduls oder mehrerer Module beeinflusst, ohne die Eingangs- oder Ausgangsparameter oder Rahmenbedingungen der Arbeitsvorgänge zu ändern, können die bereits entwickelten Arbeitsabläufe weiterverwendet werden. Da die Informationshaltung über die Ansteuerung der einzelnen Module in den Komponenten des maschinenlesbaren Codes erfolgt, die dem entsprechenden Modul zugeordnet sind, bewirkt die mit der Änderung der Konfiguration verknüpfte Aktualisierung der Komponente des maschinenlesbaren Codes, dass die Steuerbefehle bei Abarbeitung eines schon bestehenden Arbeitsablaufes korrekt erzeugt werden.

Unter Bezugnahme auf die Figuren wurden Ausführungsbeispiele detailliert beschrieben. Abwandlungen der detailliert beschriebenen Ausführungsbeispiele können bei weiteren Ausführungsbeispielen implementiert sein. Während Ausführungsbeispiele beschrieben wurden, bei denen während einer Simulationsprozedur Informationen über den Fortschritt des Arbeitsablaufes an den Host-Rechner übermittelt und dort grafisch dargestellt werden, kann auch bei der normalen Abarbeitung des Arbeitsablaufes der Fortschritt des Arbeitsablaufes an den Host-Rechner berichtet und dort, insbesondere über eine grafische Benutzeroberfläche, dargestellt werden.

Während Ausführungsbeispiele beschrieben wurden, bei denen die in das optische System eingebettete Recheneinrichtung Informationen über Arbeitsvorgänge desjenigen steuerbaren Moduls oder derjenigen steuerbaren Module an den Host-Rechner liefert, die tatsächlich vorhanden sind, kann bei weiteren Ausführungsbeispielen die eingebettete Recheneinrichtung auch Informationen über Arbeitsvorgänge ausgeben, die von steuerbaren Modulen ausführbar sind, die nicht oder noch nicht in dem optischen System vorhanden sind. So kann der Entwickler Arbeitsabläufe entwickeln und simulieren, ohne ein vollständiges optisches System mit allen derartigen Einrichtungen zu haben.

Die Vorrichtungen und Verfahren nach verschiedenen Ausführungsbeispielen der Erfindung erlauben eine Automatisierung von Arbeitsabläufen, deren Durchführung von einer in ein optisches System einbettbaren bzw. eingebetteten Recheneinrichtung gesteuert wird. Die Vorrichtungen und Verfahren können allgemein bei optischen Systemen mit einer eingebetteten Recheneinrichtung eingesetzt werden, insbesondere bei solchen optischen Systemen, bei denen eine eingebettete Recheneinrichtung mehrere steuerbare Module steuert.

## Patentansprüche

1. Vorrichtung, die in ein optisches System (1), insbesondere ein Mikroskopsystem, einbettbar ist, umfassend
wenigstens ein steuerbares Modul (11-13; 11, 12), und
eine Recheneinrichtung (5), die wenigstens eine erste Schnittstelle (8) zum Steuern des wenigstens einen steuerbaren Moduls (11-13; 11, 12) aufweist,
wobei die Recheneinrichtung (5) eine zum Datenaustausch mit einer weiteren Recheneinrichtung (3) ausgestaltete zweite Schnittstelle (9) aufweist und eingerichtet ist, um über die zweite Schnittstelle (9) Informationen (41-48; 71, 72, 75, 76) über Arbeitsvorgänge, die von dem wenigstens einen steuerbaren Modul (11-13; 11, 12) ausführbar sind, auszugeben, und um über die zweite Schnittstelle (9) Daten (35) zu empfangen, die einen eine Mehrzahl von Arbeitsvorgängen umfassenden Arbeitsablauf repräsentieren,
wobei die Recheneinrichtung (5) eingerichtet ist, um abhängig von den empfangenen Daten (35) für die Mehrzahl von Arbeitsvorgängen des Arbeitsablaufes jeweils eine Steuerinformation (73, 74; 77, 78), die dem entsprechenden Arbeitsvorgang zugeordnet ist, umzusetzen, um abhängig von der Steuerinformation (73, 74; 77, 78) das wenigstens eine steuerbare Modul (11-13; 11-12) zu steuern,
wobei die Recheneinrichtung (5) einen Speicher (7) umfasst, in dem ein maschinenlesbarer Code gespeichert ist,
**dadurch gekennzeichnet,**
**dass** die Recheneinrichtung (5) so eingerichtet ist, dass die über die zweite Schnittstelle (9) empfangenen Daten (35) den Arbeitsablauf durch eine Mehrzahl von Arbeitsvorgängen und Verknüpfungen zwischen den Arbeitsvorgängen beschreiben, und
**dass** der maschinenlesbare Code eine Mehrzahl von separaten Komponenten (21-23; 21, 22) aufweist, von denen jede genau einem steuerbaren Modul (11-13; 11, 12) des wenigstens einen steuerbaren Moduls (11-13; 11, 12) zugeordnet ist, wobei für jedes steuerbare Modul (11-13; 11, 12) des wenigstens einen steuerbaren Moduls (11-13; 11, 12) die Information über die von dem entsprechenden steuerbaren Modul (11-13; 11, 12) ausführbaren Arbeitsvorgänge und die diesen Arbeitsvorgängen zugeordneten Steuerinformationen in der Komponente (21-23; 21, 22) des maschinenlesbaren Codes gespeichert sind, die dem entsprechenden steuerbaren Modul (11-13; 11, 12) zugeordnet ist.

2. Vorrichtung nach Anspruch 1,
wobei die Recheneinrichtung (5) derart eingerichtet ist, dass die über die zweite Schnittstelle (9) ausgegebenen Informationen eine deskriptive Beschreibung (82, 85) der von dem wenigstens einen steuerbaren Modul (11-13; 11, 12) ausführbaren Arbeitsvorgänge umfassen.

3. Vorrichtung nach Anspruch 1 oder 2,
wobei die Recheneinrichtung (5) derart eingerichtet ist, dass die über die zweite Schnittstelle ausgegebenen Informationen für jeden der von dem wenigstens einen steuerbaren Modul (11-13; 11, 12) ausführbaren Arbeitsvorgänge eine oder mehrere Informationen umfassen, die ausgewählt sind aus einer Gruppe umfassend Informationen über Eingangsparameter (83), Informationen über Ausgangsparameter (84) oder Informationen über Randbedingungen des entsprechenden Arbeitsvorgangs.

4. Vorrichtung nach einem der vorhergehenden Ansprüche,
wobei die Recheneinrichtung (5) eingerichtet ist, um bei einer Modifizierung eines steuerbaren Moduls (11-13; 11, 12) des wenigstens einen steuerbaren Moduls (11-13; 11, 12) nur Daten in derjenigen Komponente (21-23; 21, 22) des maschinenlesbaren Codes anzupassen, der dem modifizierten steuerbaren Modul (11-13; 11, 12) zugeordnet ist.

5. Vorrichtung nach einem der vorhergehenden Ansprüche,
wobei die Informationen (41-48; 71, 72, 75, 76) über die Arbeitsvorgänge, die von dem wenigstens einen steuerbaren Modul (11-13; 11, 12) ausführbar sind, in einem Speicher (7) der Recheneinrichtung (5) in einer Beschreibungssprache hinterlegt sind.

6. Vorrichtung nach einem der vorhergehenden Ansprüche,
wobei die Recheneinrichtung (5) eingerichtet ist, um für jeden Arbeitsvorgang des Arbeitsablaufes einen Steuerbefehl (36) abhängig von der dem Arbeitsvorgang zugeordneten Steuerinformation (73, 74, 77, 78) und, falls der Arbeitsvorgang einen Eingangsparameter aufweist, abhängig von einem Parameterwert zu erzeugen.

7. Vorrichtung nach einem der vorhergehenden Ansprüche,
wobei in einem Speicher (7) der Recheneinrichtung (5) für die Mehrzahl von Arbeitsvorgängen des Arbeitsablaufes jeweils Informationen über das Verhalten des steuerbaren Moduls (11-13; 11, 12), von dem der Arbeitsvorgang ausführbar ist, bei Ausführung des Arbeitsvorgangs gespeichert sind.

8. Vorrichtung nach Anspruch 7,
wobei die Recheneinrichtung (5) einen Simulationsmodus aufweist und eingerichtet ist, um bei Aktivierung des Simulationsmodus abhängig von den Informationen über das Verhalten eine Durchführung des Arbeitsablaufes zu simulieren.

9. Anordnung für ein optisches System (1), insbesondere für ein Mikroskopsystem, umfassend
eine Vorrichtung (2) nach einem der vorhergehenden Ansprüche, und
eine weitere Recheneinrichtung (3), die mit der zweiten Schnittstelle (9) der Recheneinrichtung (5) gekoppelt ist,
wobei die weitere Recheneinrichtung (3) eingerichtet ist, um abhängig von den von der Recheneinrichtung (5) ausgegebenen Informationen (41-48; 71, 72, 75, 76) über die Arbeitsvorgänge die benutzerdefinierte Festlegung des Arbeitsablaufes, insbesondere über eine grafische Benutzeroberfläche (61), zu ermöglichen.

10. Optisches System, insbesondere Mikroskopsystem, umfassend die Vorrichtung (2) nach einem der Ansprüche 1-8, wobei die Vorrichtung (2) in das optische System (1) eingebettet ist.

11. Verfahren zum Steuern wenigstens eines steuerbaren Moduls eines optischen Systems (1), insbesondere eines Mikroskopsystems, wobei eine mit dem wenigstens einen steuerbaren Modul (11-13; 11, 12) gekoppelte und in das optische System (1) eingebettete Recheneinrichtung (5)
Informationen (41-48; 71, 72, 75, 76) über Arbeitsvorgänge, die von dem wenigstens einen steuerbaren Modul (11-13; 11, 12) ausführbar sind, über eine Schnittstelle (9) ausgibt;
über die Schnittstelle (9) Daten (35) empfängt, die einen eine Mehrzahl von Arbeitsvorgängen umfassenden Arbeitsablauf repräsentieren; und
abhängig von den empfangenen Daten (35) für die Mehrzahl von Arbeitsvorgängen des Arbeitsablaufes jeweils eine dem entsprechenden Arbeitsvorgang zugeordnete Steuerinformation (73, 74, 77, 78) umsetzt, um abhängig von den Steuerinformationen (73, 74, 77, 78) das wenigstens eine steuerbare Modul (11-13; 11, 12) zu steuern,
**dadurch gekennzeichnet,**
**dass** die über die zweite Schnittstelle (9) empfangenen Daten (35) den Arbeitsablauf durch eine Mehrzahl von Arbeitsvorgängen und Verknüpfungen zwischen den Arbeitsvorgängen beschreiben, und
**dass** die Recheneinrichtung (5) einen Speicher (7) mit einem darin gespeicherten maschinenlesbaren Code umfasst, der eine Mehrzahl von separaten Komponenten (21-23; 21, 22) aufweist, von denen jede genau einem steuerbaren Modul (11-13; 11, 12) des wenigstens einen steuerbaren Moduls (11-13; 11, 12) zugeordnet ist.

12. Verfahren nach Anspruch 11,
wobei die ausgegebenen Informationen (41-48; 71, 72, 75, 76) über die Arbeitsvorgänge eine deskriptive Beschreibung der Arbeitsvorgänge umfassen.

13. Verfahren nach Anspruch 11 oder 12,
wobei die ausgegebenen Informationen (41-48; 71, 72, 75, 76) über die Arbeitsvorgänge an einer weiteren Recheneinrichtung (5) empfangen und über eine Benutzerschnittstelle (61), insbesondere über eine grafische Benutzeroberfläche, ausgegeben werden, und
wobei die weitere Recheneinrichtung (3) die Daten (35), die den Arbeitsablauf repräsentieren, abhängig von einer Benutzereingabe erzeugt.

14. Verfahren nach einem der Ansprüche 11-13,
welches unter Verwendung der Vorrichtung (2) nach einem der Ansprüche 1-8 durchgeführt wird.

## Claims

1. Apparatus which can be embedded in an optical system (1), in particular a microscope system, comprising
at least one controllable module (11-13; 11, 12), and
a computing device (5) which has at least one first interface (8) for controlling the at least one controllable module (11-13; 11, 12),
the computing device (5) having a second interface (9) configured to interchange data with a further computing device (3) and being set up to output information (41-48; 71, 72, 75, 76) relating to work processes which can be carried out by the at least one controllable module (11-13; 11, 12) via the second interface (9) and to receive data (35) representing a workflow comprising a plurality of work processes via the second interface (9),
the computing device (5) being set up, on the basis of the received data (35) for the plurality of work processes in the workflow, to implement a respective item of control information (73, 74; 77, 78) assigned to the corresponding work process in order to control the at least one controllable module (11-13; 11-12) on the basis of the control information (73, 74; 77, 78), the computing device (5) comprising a memory (7) which stores a machine-readable code,
**characterized in that**
the computing device (5) is set up in such a manner that the data (35) received via the second interface (9) describe the workflow by means of a plurality of work processes and links between the work processes, and
**in that** the machine-readable code has a plurality of separate components (21-23; 21, 22), each of which is assigned to precisely one controllable module (11-13; 11, 12) of the at least one controllable module (11-13; 11, 12), the information relating to the work processes which can be carried out by the corresponding controllable module (11-13; 11, 12) and the control information assigned to these work processes being stored for each controllable module (11-13; 11, 12) of the at least one controllable module (11-13; 11, 12) **in that** component (21-23; 21, 22) of the machine-readable code which is assigned to the corresponding controllable module (11-13; 11, 12).

2. Apparatus according to Claim 1,
the computing device (5) being set up in such a manner that the information output via the second interface (9) comprises a descriptive description (82, 85) of the work processes which can be carried out by the at least one controllable module (11-13; 11, 12).

3. Apparatus according to Claim 1 or 2,
the computing device (5) being set up in such a manner that the information output via the second interface for each of the work processes which can be carried out by the at least one controllable module (11-13; 11, 12) comprises one or more items of information selected from a group comprising information relating to input parameters (83), information relating to output parameters (84) or information relating to boundary conditions of the corresponding work process.

4. Apparatus according to one of the preceding claims,
the computing device (5) being set up, in the event of a controllable module (11-13; 11, 12) of the at least one controllable module (11-13; 11, 12) being modified, to adapt only data in that component (21-23; 21, 22) of the machine-readable code which is assigned to the modified controllable module (11-13; 11, 12).

5. Apparatus according to one of the preceding claims,
the information (41-48; 71, 72, 75, 76) relating to the work processes which can be carried out by the at least one controllable module (11-13; 11, 12) being stored in a memory (7) of the computing device (5) in a description language.

6. Apparatus according to one of the preceding claims,
the computing device (5) being set up to generate a control command (36) for each work process in the workflow on the basis of the control information (73, 74, 77, 78) assigned to the work process and, if the work process has an input parameter, to generate a control command on the basis of a parameter value.

7. Apparatus according to one of the preceding claims,
a memory (7) of the computing device (5) respectively storing information relating to the behaviour of the controllable module (11-13; 11, 12), which can carry out the work process, while carrying out the work process for the plurality of work processes in the workflow.

8. Apparatus according to Claim 7,
the computing device (5) having a simulation mode and being set up, upon activation of the simulation mode, to simulate performance of the workflow on the basis of the information relating to the behaviour.

9. Arrangement for an optical system (1), in particular for a microscope system, comprising an apparatus (2) according to one of the preceding claims, and
a further computing device (3) which is coupled to the second interface (9) of the computing device (5),
the further computing device (3) being set up to enable the user-defined stipulation of the workflow, in particular via a graphical user interface (61), on the basis of the information (41-48; 71, 72, 75, 76) relating to the work processes which is output by the computing device (5).

10. Optical system, in particular microscope system, comprising
the apparatus (2) according to one of Claims 1-8, the apparatus (2) being embedded in the optical system (1).

11. Method for controlling at least one controllable module of an optical system (1), in particular a microscope system, a computing device (5) which is coupled to the at least one controllable module (11-13; 11, 12) and is embedded in the optical system (1) outputting information (41-48; 71, 72, 75, 76) relating to work processes which can be carried out by the at least one controllable module (11-13; 11, 12) via an interface (9);
receiving data (35) representing a workflow comprising a plurality of work processes via the interface (9); and
implementing a respective item of control information (73, 74, 77, 78) assigned to the corresponding work process on the basis of the received data (35) for the plurality of work processes in the workflow in order to control the at least one controllable module (11-13; 11, 12) on the basis of the control information (73, 74, 77, 78),
**characterized in that**
the data (35) received via the second interface (9) describe the workflow by means of a plurality of work processes and links between the work processes, and
**in that** the computing device (5) comprises a memory (7) with a machine-readable code which is stored therein and has a plurality of separate components (21-23; 21, 22), each of which is assigned to precisely one controllable module (11-13; 11, 12) of the at least one controllable module (11-13; 11, 12).

12. Method according to Claim 11,
the output information (41-48; 71, 72, 75, 76) relating to the work processes comprising a descriptive description of the work processes.

13. Method according to Claim 11 or 12,
the output information (41-48; 71, 72, 75, 76) relating to the work processes being received at a further computing device (5) and being output via a user interface (61), in particular via a graphical user interface, and
the further computing device (3) generating the data (35) representing the workflow on the basis of a user input.

14. Method according to one of Claims 11-13,
which is carried out using the apparatus (2) according to one of Claims 1-8.

## Revendications

1. Dispositif, qui peut être intégré dans un système optique (1), en particulier un système de microscope, comprenant :
au moins un module commandable (11-13 ; 11, 12), et
un appareil de calcul (5) qui présente au moins une première interface (8) pour la commande de l'au moins un module commandable (11-13 ; 11, 12),
dans lequel l'appareil de calcul (5) présente une seconde interface (9) agencée pour l'échange de données avec un autre appareil de calcul (3) et est conçu pour délivrer en sortie par le biais de la seconde interface (9) des informations (41-48 ; 71, 72, 75, 76) sur des opérations de travail, qui peuvent être exécutées par l'au moins un module commandable (11-13 ; 11, 12) et pour recevoir par le biais de la seconde interface (9) des données (35) qui représentent un déroulement de travail comprenant une pluralité d'opérations de travail,
dans lequel l'appareil de calcul (5) est conçu pour convertir, en fonction des données (35) reçues pour la pluralité d'opérations de travail du déroulement de travail, une information de commande (73, 74 ; 77, 78) respective, qui est associée à l'opération de travail correspondante, pour commander en fonction de l'information de commande (73, 74 ; 77, 78) l'au moins un module commandable (11-13 ; 11-12),
dans lequel l'appareil de calcul (5) comprend une mémoire (7) dans laquelle est stocké un code lisible par machine,
**caractérisé en ce**
**que** l'appareil de calcul (5) est conçu de sorte que les données (35) reçues par le biais de la seconde interface (9) décrivent le déroulement de travail par une pluralité d'opérations de travail et de liaisons entre les opérations de travail, et
**que** le code lisible par machine présente une pluralité de composantes (21-23 ; 21, 22) séparées dont chacune desquelles est associée précisément à un module commandable (11-13 ; 11, 12) de l'au moins un module commandable (11-13 ; 11, 12), dans lequel, pour chaque module commandable (11-13 ; 11, 12) de l'au moins un module commandable (11-13 ; 11, 12), l'information au sujet des opérations de travail exécutables par le module commandable (11-13 ; 11, 12) correspondant et les informations de commande associées à ces opérations de travail sont stockées dans la composante (21-23 ; 21, 22) du code lisible par machine qui est associée au module commandable (11-13 ; 11, 12) correspondant.

2. Dispositif selon la revendication 1,
dans lequel l'appareil de calcul (5) est conçu de manière que les informations délivrées par le biais de la seconde interface (9) comprennent une description détaillée (82, 85) des opérations de travail exécutables par l'au moins un module commandable (11-13 ; 11, 12).

3. Dispositif selon la revendication 1 ou 2,
dans lequel l'appareil de calcul (5) est conçu de manière que les informations délivrées par la seconde interface comprennent pour chacune des opérations de travail exécutables par l'au moins un module commandable (11-13 ; 11, 12) une ou plusieurs informations qui sont sélectionnées parmi un groupe comprenant des informations sur des paramètres d'entrée (83), des informations sur des paramètres de sortie (84) ou des informations sur des conditions marginales de l'opération de travail correspondante.

4. Dispositif selon l'une quelconque des revendications précédentes,
dans lequel l'appareil de calcul (5) est conçu pour, en cas d'une modification d'un module commandable (11-13 ; 11, 12) de l'au moins un module commandable (11-13 ; 11, 12), adapter uniquement des données dans la composante (21-23 ; 21, 22) du code lisible par machine, qui est associée au module commandable modifié (11-13 ; 11, 12).

5. Dispositif selon l'une quelconque des revendications précédentes,
dans lequel les informations (41-48 ; 71, 72, 75, 76) sur les opérations de travail, qui sont exécutables par l'au moins un module commandable (11-13 ; 11, 12), sont déposées dans une mémoire (7) de l'appareil de calcul (5) dans un langage de description.

6. Dispositif selon l'une quelconque des revendications précédentes,
dans lequel l'appareil de calcul (5) est conçu pour générer pour chaque opération de travail du déroulement de travail une instruction de commande (36) en fonction de l'information de commande (73, 74, 77, 78) associée à l'opération de travail et, si l'opération de travail présente un paramètre d'entrée, en fonction d'une valeur de valeur de paramètre.

7. Dispositif selon l'une quelconque des revendications précédentes,
dans lequel, pour la pluralité d'opérations de travail du déroulement de travail, des informations respectives sur le comportement du module commandable (11-13 ; 11, 12), par lequel l'opération de travail est exécutable, sont stockées dans une mémoire (7) de l'appareil de calcul (5) lors de l'exécution de l'opération de travail.

8. Dispositif selon la revendication 7,
dans lequel l'appareil de calcul (5) présente un mode de simulation et est conçu pour, lors de l'activation du mode de simulation, simuler une réalisation du déroulement de travail en fonction des informations sur le comportement.

9. Agencement pour un système optique (1), en particulier pour un système de microscope, comprenant
un dispositif (2) selon l'une quelconque des revendications précédentes, et un autre appareil de calcul (3) qui est couplé à la seconde interface (9) de l'appareil de calcul (5),
dans lequel l'autre appareil de calcul (3) est conçu, pour permettre, en fonction des informations (41-48 ; 71, 72, 75, 76) délivrées par l'appareil de calcul (5) sur les opérations de travail, la détermination définie par l'utilisateur du déroulement de travail, en particulier par le biais d'une interface utilisateur (61) graphique.

10. Système optique, en particulier système de microscope, comprenant
le dispositif (2) selon l'une quelconque des revendications 1 à 8, dans lequel le dispositif (2) est intégré dans le système optique (1).

11. Procédé de commande d'au moins un module commandable d'un système optique (1), en particulier d'un système de microscope, dans lequel un appareil de calcul (5) couplé avec l'au moins un module commandable (11-13 ; 11, 12) et intégré dans le système optique (1) délivre en sortie, par le biais d'une interface (9), des informations (41-48 ; 71, 72, 75, 76) sur des opérations de travail qui sont exécutables par l'au moins un module commandable (11-13 ; 11, 12) ;
reçoit, par le biais de l'interface (9), des données (35) qui représentent un déroulement de travail comprenant une pluralité d'opérations de travail ; et
en fonction des données (35) reçues pour la pluralité des opérations de travail du déroulement de travail applique respectivement une information de commande (73, 74, 77, 78) associée à l'opération de travail correspondante pour commander, en fonction des informations de commande (73, 74, 77, 78), l'au moins un module commandable (11-13 ; 11, 12),
**caractérisé en ce**
**que** les données (35) reçues par le biais de la seconde interface (9) décrivent le déroulement de travail par une pluralité d'opérations de travail et de liaisons entre les opérations de travail, et
**que** l'appareil de calcul (5) comprend une mémoire (7) avec un code lisible par machine stocké dans celle-ci, qui présente une pluralité de composantes (21-23 ; 21, 22) séparées dont chacune desquelles est associée précisément à un module commandable (11-13 ; 11, 12) de l'au moins un module commandable (11-13 ; 11, 12).

12. Procédé selon la revendication 11,
dans lequel les informations (41-48 ; 71, 72, 75, 76) délivrées en sortie sur les opérations de travail comprennent une description détaillée des opérations de travail.

13. Procédé selon la revendication 11 ou 12,
dans lequel les informations (41-48 ; 71, 72, 75, 76) délivrées en sortie sur les opérations de travail sont reçues sur un autre appareil de calcul (5) et délivrées en sortie par le biais d'une interface utilisateur (61), en particulier d'une interface utilisateur graphique, et
dans lequel l'autre appareil de calcul (3) génère les données (35), qui représentent le déroulement de travail, en fonction d'une entrée d'utilisateur.

14. Procédé selon l'une quelconque des revendications 11 à 13,
qui est réalisé en utilisant le dispositif (2) selon l'une quelconque des revendications 1 à 8.
